# EUROPEAN PATENT APPLICATION

(11) **EP 4 221 338 A1**
(43) Date of publication of application: **02.08.2023**
(21) Application number: 20958265.9
(22) Date of filing: 22.10.2020
(51) Int. Cl.: H04W 36/08

(54) **COMMUNICATION METHOD FOR INTEGRATED ACCESS AND BACKHAUL (IAB) SYSTEM, AND RELATED DEVICE**

(71) Applicant: Huawei Technologies Co., Ltd., Shenzhen, Guangdong 518129 (CN)
(72) Inventor: LIU, Jing, Shenzhen, Guangdong 518129 (CN); SHI, Yulong, Shenzhen, Guangdong 518129 (CN); ZHU, Yuanping, Shenzhen, Guangdong 518129 (CN); ZHUO, Yibin, Shenzhen, Guangdong 518129 (CN)
(74) Representative: MERH-IP Matias Erny Reichl Hoffmann Patentanwälte PartG mbB
(86) International application number: PCT/CN2020/123014
(87) International publication number: WO 2022/082683

(57) **Abstract**

Embodiments of this application provide a communication method applied to an integrated access and backhaul IAB system and a related device, so that after a parent node of a first IAB node changes from a source parent node to a target parent node, the target parent node of the first IAB node can flexibly configure a communication resource of the first IAB node based on configuration information of a BH RLC CH from an IAB donor. In the method, an IAB donor obtains configuration information of a backhaul radio link control channel BH RLC CH, where the configuration information of the BH RLC CH is configuration information of a BH RLC CH between a first integrated access and backhaul IAB node and a source parent node of the first IAB node. Then, the IAB donor sends the configuration information of the BH RLC CH to a target parent node of the first IAB node.

## Description

### TECHNICAL FIELD

Embodiments of this application relate to the communication field, and in particular, to a communication method applied to an integrated access and backhaul IAB system and a related device.

### BACKGROUND

An integrated access and backhaul (integrated access and backhaul, IAB) network architecture in 3rd Generation Partnership Project (3rd Generation Partnership Project, 3GPP) R15 includes an IAB donor (IAB donor) and an IAB node (IAB node). When a central unit (central unit, CU)-distributed unit (distributed unit, DU) architecture is considered, the IAB donor includes an IAB donor CU and an IAB donor DU. The IAB node includes an IAB node mobile terminal (mobile terminal, MT) functional unit and an IAB node DU. The IAB node MT functional unit serves a user equipment (user equipment, UE) module and is responsible for communicating with a parent node of the IAB node MT functional unit. The IAB node DU serves as a DU to provide access services for UE or another IAB node attached to the IAB node DU. A connection between the IAB node and the IAB donor CU is an F 1 connection.

Currently, in an actual communication process, quality of a link between two communication nodes may change. For example, a radio link failure (radio link failure, RLF), an integrity protection failure, or a radio resource control (radio resource control, RRC) reconfiguration failure occurs. As a result, a parent node connected to the IAB node may change, and the IAB node is triggered to perform migration. To be specific, the IAB node releases a connection to a source parent node, and establishes a new connection to a target parent node. The source parent node and the target parent node each may be an intermediate IAB node on a path between the IAB node and the IAB donor, or may be the IAB donor DU in the IAB donor.

However, in an IAB network, because the parent node connected to the IAB node changes, a link resource between the IAB node and the target parent node needs to be reconfigured. How to flexibly configure a communication resource of the IAB node is an urgent problem to be resolved.

### SUMMARY

Embodiments of this application provide a communication method applied to an integrated access and backhaul IAB system and a related device, so that after a parent node of a first IAB node changes from a source parent node to a target parent node, the target parent node of the first IAB node can flexibly configure a communication resource of the first IAB node based on configuration information of a BH RLC CH from an IAB donor.

A first aspect of embodiments of this application provides a communication method applied to an integrated access and backhaul IAB system. The method may be applied to an integrated access and backhaul donor IAB donor, or may be applied to a component (for example, a processor, a chip, or a chip system) of the IAB donor. In the method, the integrated access and backhaul donor IAB donor obtains configuration information of a backhaul radio link control channel BH RLC CH, where the configuration information of the BH RLC CH is configuration information of a BH RLC CH between a first integrated access and backhaul IAB node and a source parent node of the first IAB node; and then the IAB donor sends the configuration information of the BH RLC CH to a target parent node of the first IAB node.

Based on the foregoing technical solution, the IAB donor obtains the configuration information of the BH RLC CH between the first IAB node and the source parent node of the first IAB node, and sends the configuration information of the BH RLC CH to the target parent node of the first IAB node. After a parent node of the first IAB node changes from the source parent node to the target parent node, the target parent node of the first IAB node may further determine, by using the configuration information of the BH RLC CH, a configuration of a BH RLC CH between the first IAB node and the target parent node of the first IAB node. To be specific, when the target parent node of the first IAB node determines that the configuration information of the BH RLC CH from the IAB donor may be used for communication with the first IAB node, configuration information of a BH RLC CH does not need to be sent to the first IAB node. In this way, the first IAB node can perform communication in an IAB network through the target parent node of the first IAB node, and this reduces resource configuration overheads. When the target parent node of the first IAB node determines that the configuration information of the BH RLC CH from the IAB donor is not used for communication with the first IAB node, configuration information of a BH RLC CH corresponding to the first IAB node may be generated based on an air interface resource of the parent node, and the first IAB node can perform communication in the IAB network through the target parent node of the first IAB node. In this way, the parent node may flexibly configure a communication resource of the first IAB node based on the configuration information of the BH RLC CH from the IAB donor.

It should be noted that, in embodiments of this application, the target parent node of the first IAB node may be an intermediate IAB node on a path between the first IAB node and the IAB donor, or may be an IAB donor DU in the IAB donor. This is not limited herein.

In a specific implementation of the first aspect of embodiments of this application, the configuration information of the BH RLC CH includes at least one of the following: an identifier of the BH RLC CH, a logical channel identifier corresponding to the BH RLC CH, radio link control RLC configuration information, or logical channel configuration information.

Based on the foregoing technical solution, the configuration information of the BH RLC CH may be implemented by at least one of the foregoing plurality of items, that is, a plurality of implementations of obtaining and sending the configuration information of the BH RLC CH by the IAB donor are provided, thereby improving implementability of the solution.

In a specific implementation of the first aspect of embodiments of this application, the IAB donor is a target IAB donor, the target parent node is connected to the target IAB donor, and the source parent node is connected to a source IAB donor.

Based on the foregoing technical solution, an IAB donor connected to the first IAB node may also change. An IAB donor connected to the source parent node of the first IAB node is the source IAB donor, and an IAB donor connected to the target parent node of the first IAB node is the target IAB donor. Therefore, this solution may be applied to a scenario in which the IAB donor connected to the first IAB node changes, for example, an inter-donor CU (Inter-donor-CU) re-establishment scenario.

In a specific implementation of the first aspect of embodiments of this application, that the IAB donor obtains the configuration information of the BH RLC CH includes: The IAB donor receives a retrieve user equipment UE context response message from the source IAB donor, where the retrieve UE context response message includes the configuration information of the BH RLC CH.

Based on the foregoing technical solution, when the IAB donor is the donor node (namely, the target IAB donor) connected to the target parent node of the first IAB node, the IAB donor may obtain the configuration information of the BH RLC CH from the retrieve user equipment UE context response message sent by the donor node connected to the source parent node of the first IAB node. A specific implementation for the IAB donor to obtain the configuration information of the BH RLC CH is provided, thereby improving implementability of the solution.

In a specific implementation of the first aspect of embodiments of this application, the IAB donor sends first indication information to the first IAB node through the target parent node, where the first indication information indicates a change of the IAB donor connected to the first IAB node.

Based on the foregoing technical solution, when the IAB donor is the donor node (namely, the target IAB donor) connected to the target parent node of the first IAB node, the IAB donor may further send, to the first IAB node through the target parent node of the first IAB node, the first indication information indicating the change of the IAB donor connected to the first IAB node, so that the first IAB node determines that the donor node of the first IAB node changes. Subsequently, the first IAB node can trigger an establishment/re-establishment procedure of an F1 interface for the target donor node, to ensure that the first IAB node can be connected to the target IAB donor for communication through the target parent node.

In a specific implementation of the first aspect of embodiments of this application, the first indication information is carried in an RRC re-establishment message; or the first indication information is carried in an RRC reconfiguration message.

Based on the foregoing technical solution, a bearer manner of the first indication information may be the RRC re-establishment message or the RRC reconfiguration message. A plurality of bearer manners of the first indication information are provided, thereby improving implementability of the solution.

In a specific implementation of the first aspect of embodiments of this application, the IAB donor sends internet protocol IP address information of the IAB donor to the first IAB node through the target parent node.

Based on the foregoing technical solution, when the IAB donor is the donor node (namely, the target IAB donor) connected to the target parent node of the first IAB node, the IAB donor may further send, to the first IAB node through the target parent node of the first IAB node, the IP address information of the target IAB donor, so that the first IAB node can trigger the establishment/re-establishment procedure of the F1 interface for the donor node indicated by the IP address information, to ensure that the first IAB node can be connected to the target IAB donor for communication through the target parent node.

In a specific implementation of the first aspect of embodiments of this application, the IP address information of the target IAB donor is carried in the RRC reconfiguration message.

Based on the foregoing technical solution, a bearer manner of the internet protocol IP address information of the target IAB donor may be the RRC reconfiguration message. A specific implementation of the internet protocol IP address information of the target IAB donor is provided, thereby improving implementability of the solution.

In a specific implementation of the first aspect of embodiments of this application, the method may further include: The IAB donor sends first configuration information to the first IAB node through the target parent node, where the first configuration information includes at least one of the following: a source identifier of a cell of the first IAB node, a target identifier of the cell of the first IAB node, a PLMN ID of the cell of the first IAB node, SSB information of the cell of the first IAB node, or activation indication information of the cell of the first IAB node.

Based on the foregoing technical solution, when the IAB donor is the donor node (namely, the target IAB donor) connected to the target parent node of the first IAB node, the IAB donor may further send the first configuration information to the first IAB node through the target parent node of the first IAB node, so that the first IAB node updates a network configuration of the first IAB node based on the first configuration information, to ensure that the first IAB node can be connected to the target IAB donor for communication through the target parent node.

A second aspect of embodiments of this application provides a communication method applied to an integrated access and backhaul IAB system. The method may be applied to a target parent node of a first IAB node, or may be applied to a component (for example, a processor, a chip, or a chip system) of the target parent node of the first IAB node. The method includes: The target parent node of the first integrated access and backhaul IAB node receives configuration information of a backhaul radio link control channel BH RLC CH from an IAB donor (IAB donor), where the configuration information of the BH RLC CH is configuration information of a BH RLC CH between the first IAB node and a source parent node of the first IAB node. The target parent node determines a configuration of a BH RLC CH between the first IAB node and the target parent node based on the configuration information of the BH RLC CH.

Based on the foregoing technical solution, the target parent node of the first IAB node receives the configuration information of the BH RLC CH between the first integrated access and backhaul IAB node and the source parent node of the first IAB node from the IAB donor, and determines the configuration of the BH RLC CH between the first IAB node and the target parent node based on the configuration information of the BH RLC CH. After a parent node of the first IAB node changes from the source parent node to the target parent node, the target parent node of the first IAB node may further determine, by using the configuration information of the BH RLC CH, the configuration of the BH RLC CH between the first IAB node and the target parent node. To be specific, when the target parent node of the first IAB node determines that the configuration information of the BH RLC CH from the IAB donor may be used for communication with the first IAB node, configuration information of a BH RLC CH does not need to be sent to the first IAB node. In this way, the first IAB node can perform communication in an IAB network through the target parent node of the first IAB node, and this reduces resource configuration overheads. When the target parent node of the first IAB node determines that the configuration information of the BH RLC CH from the IAB donor is not used for communication with the first IAB node, configuration information of a BH RLC CH corresponding to the first IAB node may be generated based on an air interface resource of the parent node, and the first IAB node can perform communication in the IAB network through the target parent node of the first IAB node. In this way, the parent node may flexibly configure a communication resource of the first IAB node based on the configuration information of the BH RLC CH from the IAB donor.

It should be noted that, in embodiments of this application, the target parent node of the first IAB node may be an intermediate IAB node on a path between the first IAB node and the IAB donor, or may be an IAB donor DU in the IAB donor. This is not limited herein.

In a specific implementation of the second aspect of embodiments of this application, the configuration information of the BH RLC CH may include at least one of the following: an identifier of the BH RLC CH, a logical channel identifier corresponding to the BH RLC CH, radio link control RLC configuration information, or logical channel configuration information.

Based on the foregoing technical solution, the configuration information of the BH RLC CH may be implemented by at least one of the foregoing plurality of items, that is, a plurality of implementations of obtaining and sending the configuration information of the BH RLC CH by the IAB donor are provided, thereby improving implementability of the solution.

A third aspect of embodiments of this application provides a communication method applied to an integrated access and backhaul IAB system. The method may be applied to a first integrated access and backhaul IAB node, or may be applied to a component (for example, a processor, a chip, or a chip system) of the first IAB node. In the method, the first integrated access and backhaul IAB node determines that RRC re-establishment with an IAB donor (IAB donor) is completed; and the first IAB node sends first information to a child node of the first IAB node. The first information includes at least one of the following: indication information indicating a change of an IAB donor connected to the first IAB node, RRC re-establishment indication information, identification information of a base station for RRC re-establishment, or identification information of a cell for RRC re-establishment.

Based on the foregoing technical solution, after the first IAB node determines that the RRC re-establishment with the target IAB donor is completed, that is, after a donor node of the first IAB node changes to the target IAB donor, the first IAB node sends the first information to the child node of the first IAB node, so that the child node of the first IAB node triggers RRC re-establishment and/or establishment/re-establishment of an F 1 connection to the target IAB donor based on the first information, to ensure that the child node of the first IAB node can work normally.

It should be noted that, in embodiments of this application, the first IAB node is a parent node of the child node of the first IAB node, and the child node of the first IAB node may be an IAB node, or may be a terminal device (for example, UE). This is not limited herein.

In a specific implementation of the third aspect of embodiments of this application, the first information is carried in a media access control control element MAC CE; or the first information is carried in a backhaul adaptation protocol control packet data unit BAP control PDU.

Based on the foregoing technical solution, a bearer manner of the first information may be the media access control control element MAC CE or the BAP control PDU. A plurality of bearer manners of the first information are provided, thereby improving implementability of the solution.

In a specific implementation of the third aspect of embodiments of this application, before the first IAB node sends the first information to the child node, the method further includes the following step.

The first IAB node receives first indication information from a target IAB donor, where the first indication information indicates the change of the IAB donor connected to the first IAB node.

Based on the foregoing technical solution, before the first IAB node sends the first information to the child node of the first IAB node, the first IAB node may further receive the first indication information that is sent by the target IAB donor and that indicates the change of the IAB donor connected to the first IAB node, so that the first IAB node determines that the donor node that is connected to the first IAB node and the child node changes. Subsequently, the first IAB node may further notify the child node of the first IAB node, so that the child node of the first IAB node triggers the RRC re-establishment and/or the establishment/re-establishment of the F 1 connection, to ensure that the child node of the first IAB node can be connected to the target IAB donor for communication through the first IAB node.

Optionally, the first IAB node may send the first information to the child node based on the first indication information.

In a specific implementation of the third aspect of embodiments of this application, the first indication information is carried in an RRC re-establishment message; or the first indication information is carried in an RRC reconfiguration message.

Based on the foregoing technical solution, a bearer manner of the first indication information may be the RRC re-establishment message or the RRC reconfiguration message. A plurality of bearer manners of the first indication information are provided, thereby improving implementability of the solution.

In a specific implementation of the third aspect of embodiments of this application, before the first IAB node sends the first information to the child node of the first IAB node, the method may further include: The first IAB node determines that establishment/re-establishment of an F 1 connection to the IAB donor is completed or the F 1 connection has been recovered.

Based on the foregoing technical solution, after determining that the establishment/re-establishment of the F 1 connection to the IAB donor is completed or the F 1 connection has been recovered, the first IAB node sends the first information to the child node of the first IAB node, so that the child node can trigger the RRC re-establishment and/or the establishment/re-establishment of the F 1 connection based on the first information and based on the established/re-established F 1 connection or the recovered F 1 connection between the first IAB node and the IAB donor.

In a specific implementation of the third aspect of embodiments of this application, the method may further include: The first IAB node receives IP address information of the IAB donor from the IAB donor.

Based on the foregoing technical solution, the first IAB node may further receive, through a target parent node of the first IAB node, the IP address information of the target IAB donor from the target IAB donor, so that the first IAB node can trigger a establishment/re-establishment procedure of the F 1 interface for the donor node indicated by the IP address information, to ensure that the first IAB node can work normally after being connected to the target IAB donor through the target parent node.

In a specific implementation of the third aspect of embodiments of this application, the IP address information of the target IAB donor is carried in the RRC reconfiguration message.

Based on the foregoing technical solution, a bearer manner of the IP address information of the target IAB donor may be the RRC reconfiguration message. A specific implementation of the IP address information of the target IAB donor is provided, thereby improving implementability of the solution.

In a specific implementation of the third aspect of embodiments of this application, after the first IAB node determines that the RRC re-establishment with the IAB donor (IAB donor) is completed, the method may further include: The first IAB node receives first configuration information from the IAB donor, where the first configuration information includes at least one of the following: a source identifier of a cell of the first IAB node, a target identifier of the cell of the first IAB node, a PLMN ID of the cell of the first IAB node, SSB information of the cell of the first IAB node, or activation indication information of the cell of the first IAB node.

Based on the foregoing technical solution, the first IAB node may further receive, through the target parent node of the first IAB node, the first configuration information sent by the target IAB donor, so that the first IAB node updates a configuration of the first IAB node based on the first configuration information, to ensure that the first IAB node can be connected to the target IAB donor for communication through the target parent node.

A fourth aspect of embodiments of this application provides a communication method applied to an integrated access and backhaul IAB system. The method may be applied to a child node of a first IAB node, or may be applied to a component (for example, a processor, a chip, or a chip system) of the child node of the first IAB node. In the method, the child node of the first integrated access and backhaul IAB node receives first information from the first IAB node. The first information includes at least one of the following: indication information indicating a change of an IAB donor connected to the first IAB node, RRC re-establishment indication information, identification information of a base station for RRC re-establishment, or identification information of a cell for RRC re-establishment. The child node triggers, based on the first information, at least one of the following procedures: the RRC re-establishment, F 1 connection establishment, or F 1 connection re-establishment.

Based on the foregoing technical solution, after the first IAB node determines that RRC re-establishment with a target IAB donor is completed, that is, after a donor node of the first IAB node changes to the target IAB donor, the child node of the first IAB node receives the first information sent by a parent node, namely, the first IAB node, so that the child node of the first IAB node triggers RRC re-establishment and/or establishment/re-establishment of an F 1 connection to the target IAB donor based on the first information, to ensure that the child node of the first IAB node can be connected to the target IAB donor for communication through the first IAB node.

It should be noted that, in embodiments of this application, the first IAB node is a parent node of the child node of the first IAB node, and the child node of the first IAB node may be an IAB node, or may be a terminal device (for example, UE). This is not limited herein.

In a specific implementation of the fourth aspect of embodiments of this application, the first information is carried in a media access control control element MAC CE; or the first information is carried in a backhaul adaptation protocol control packet data unit BAP control PDU.

Based on the foregoing technical solution, a bearer manner of the first information may be the media access control control element MAC CE or the BAP control PDU. A plurality of bearer manners of the first information are provided, thereby improving implementability of the solution.

A fifth aspect of embodiments of this application provides a communication apparatus, where the apparatus is an integrated access and backhaul donor IAB donor, and the apparatus includes a processing unit and a transceiver unit.

The processing unit is configured to obtain configuration information of a backhaul radio link control channel BH RLC CH, where the configuration information of the BH RLC CH is configuration information of a BH RLC CH between a first integrated access and backhaul IAB node and a source parent node of the first IAB node.

The transceiver unit is configured to send the configuration information of the BH RLC CH to a target parent node of the first IAB node.

In a specific implementation of the fifth aspect of embodiments of this application, the configuration information of the BH RLC CH includes at least one of the following:
an identifier of the BH RLC CH, a logical channel identifier corresponding to the BH RLC CH, radio link control RLC configuration information, or logical channel configuration information.

In a specific implementation of the fifth aspect of embodiments of this application, the IAB donor is a target IAB donor, the target parent node is connected to the target IAB donor, and the source parent node is connected to a source IAB donor.

In a specific implementation of the fifth aspect of embodiments of this application,
the processing unit is specifically configured to receive a retrieve user equipment UE context response message from the source IAB donor, where the retrieve UE context response message includes the configuration information of the BH RLC CH.

In a specific implementation of the fifth aspect of embodiments of this application, the transceiver unit is further configured to:
send first indication information to the first IAB node through the target parent node, where the first indication information indicates a change of an IAB donor connected to the first IAB node.

In a specific implementation of the fifth aspect of embodiments of this application,
the first indication information is carried in an RRC re-establishment message; or
the first indication information is carried in an RRC reconfiguration message.

In a specific implementation of the fifth aspect of embodiments of this application, the transceiver unit is further configured to:
send internet protocol IP address information of the target IAB donor to the first IAB node through the target parent node.

In a specific implementation of the fifth aspect of embodiments of this application, the IP address information of the target IAB donor is carried in the RRC reconfiguration message.

In a specific implementation of the fifth aspect of embodiments of this application, the transceiver unit is further configured to:
send first configuration information to the first IAB node through the target parent node, where the first configuration information includes at least one of the following:
a source identifier of a cell of the first IAB node, a target identifier of the cell of the first IAB node, a PLMN ID of the cell of the first IAB node, SSB information of the cell of the first IAB node, or activation indication information of the cell of the first IAB node.

In the fifth aspect of embodiments of this application, composition modules of the communication apparatus may be further configured to perform the steps performed in the possible implementations of the first aspect. For details, refer to the first aspect. Details are not described herein again.

A sixth aspect of embodiments of this application provides a communication apparatus. The apparatus is a target parent node of a first IAB node, and the apparatus includes a transceiver unit and a processing unit.

The transceiver unit is configured to receive configuration information of a backhaul radio link control channel BH RLC CH from an integrated access and backhaul donor IAB donor, where the configuration information of the BH RLC CH is configuration information of a BH RLC CH between the first integrated access and backhaul IAB node and a source parent node of the first IAB node.

The processing unit is configured to determine a configuration of a BH RLC CH between the first IAB node and the target parent node based on the configuration information of the BH RLC CH.

In a specific implementation of the sixth aspect of embodiments of this application, the configuration information of the BH RLC CH includes at least one of the following:
an identifier of the BH RLC CH, a logical channel identifier corresponding to the BH RLC CH, radio link control RLC configuration information, or logical channel configuration information.

In the sixth aspect of embodiments of this application, composition modules of the communication apparatus may be further configured to perform the steps performed in the possible implementations of the second aspect. For details, refer to the second aspect. Details are not described herein again.

A seventh aspect of embodiments of this application provides a communication apparatus, where the apparatus is a first integrated access and backhaul IAB node, and the apparatus includes a processing unit and a transceiver unit.

The processing unit is configured to determine that RRC re-establishment with a target integrated access and backhaul donor IAB donor is completed.

The transceiver unit is configured to send first information to a child node of the first IAB node.

The first information includes at least one of the following:
indication information indicating a change of an IAB donor connected to the first IAB node, RRC re-establishment indication information, identification information of a base station for RRC re-establishment, or identification information of a cell for RRC re-establishment.

In a specific implementation of the seventh aspect of embodiments of this application,
the first information is carried in a media access control control element MAC CE; or
the first information is carried in a backhaul adaptation protocol control packet data unit BAP control PDU.

In a specific implementation of the seventh aspect of embodiments of this application, the transceiver unit is further configured to:
receive first indication information from a target IAB donor, where the first indication information indicates the change of the IAB donor connected to the first IAB node.

In a specific implementation of the seventh aspect of embodiments of this application,
the first indication information is carried in an RRC re-establishment message; or
the first indication information is carried in an RRC reconfiguration message.

In a specific implementation of the seventh aspect of embodiments of this application, the processing unit is further configured to determine that establishment/re-establishment of an F 1 connection to the IAB donor is completed or the F 1 connection has been recovered.

In a specific implementation of the seventh aspect of embodiments of this application, the transceiver unit is further configured to:
receive IP address information of the target IAB donor from the target IAB donor.

In a specific implementation of the seventh aspect of embodiments of this application, the IP address information of the target IAB donor is carried in the RRC reconfiguration message.

In a specific implementation of the seventh aspect of embodiments of this application, the transceiver unit is specifically configured to:
receive first configuration information from the target IAB donor, where the first configuration information includes at least one of the following:
a source identifier of a cell of the first IAB node, a target identifier of the cell of the first IAB node, a PLMN ID of the cell of the first IAB node, SSB information of the cell of the first IAB node, or activation indication information of the cell of the first IAB node.

In the seventh aspect of embodiments of this application, composition modules of the communication apparatus may be further configured to perform the steps performed in the possible implementations of the third aspect. For details, refer to the third aspect. Details are not described herein again.

An eighth aspect of embodiments of this application provides a communication apparatus, where the apparatus is a child node of a first IAB node, and the apparatus includes a transceiver unit and a processing unit.

The transceiver unit is configured to receive first information from the first IAB node, where the first information includes at least one of the following:
indication information indicating a change of an IAB donor connected to the first IAB node, RRC re-establishment indication information, identification information of a base station for RRC re-establishment, or identification information of a cell for RRC re-establishment.

The processing unit is configured to trigger at least one of the following procedures based on the first information: the RRC re-establishment, F 1 connection establishment, or F 1 connection re-establishment.

In a specific implementation of the eighth aspect of embodiments of this application,
the first information is carried in a media access control control element MAC CE; or
the first information is carried in a backhaul adaptation protocol control packet data unit BAP control PDU.

In the eighth aspect of embodiments of this application, composition modules of the communication apparatus may be further configured to perform the steps performed in the possible implementations of the fourth aspect. For details, refer to the fourth aspect. Details are not described herein again.

A ninth aspect of embodiments of this application provides a communication apparatus. The communication apparatus includes a processor. The processor is coupled to a memory, the memory is configured to store a computer program or instructions, and the processor is configured to execute the computer program or the instructions in the memory, so that the method according to any one of the first aspect or the possible implementations of the first aspect is performed.

A tenth aspect of embodiments of this application provides a communication apparatus. The communication apparatus includes a processor. The processor is coupled to a memory, the memory is configured to store a computer program or instructions, and the processor is configured to execute the computer program or the instructions in the memory, so that the method according to any one of the second aspect or the possible implementations of the second aspect is performed.

An eleventh aspect of embodiments of this application provides a communication apparatus. The communication apparatus includes a processor. The processor is coupled to a memory, the memory is configured to store a computer program or instructions, and the processor is configured to execute the computer program or the instructions in the memory, so that the method according to any one of the third aspect or the possible implementations of the third aspect is performed.

A twelfth aspect of embodiments of this application provides a communication apparatus. The communication apparatus includes a processor. The processor is coupled to a memory, the memory is configured to store a computer program or instructions, and the processor is configured to execute the computer program or the instructions in the memory, so that the method according to any one of the fourth aspect or the possible implementations of the fourth aspect is performed.

A thirteenth aspect of embodiments of this application provides a computer-readable storage medium storing one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect.

A fourteenth aspect of embodiments of this application provides a computer program product (or referred to as a computer program) storing one or more computers. When the computer program product is executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect.

A fifteenth aspect of embodiments of this application provides a chip system. The chip system includes a processor, configured to support a communication apparatus in implementing a function according to any one of the first aspect or the possible implementations of the first aspect, or support a communication apparatus in implementing a function according to any one of the second aspect or the possible implementations of the second aspect, or support a communication apparatus in implementing a function according to any one of the third aspect or the possible implementations of the third aspect, or support a communication apparatus in implementing a function according to any one of the fourth aspect or the possible implementations of the fourth aspect. In a possible design, the chip system may further include a memory. The memory is configured to store program instructions and data that are necessary for an access network device. The chip system may include a chip, or may include a chip and another discrete component.

A sixteenth aspect of embodiments of this application provides a communication system. The communication system includes one or more communication apparatuses shown in the fifth aspect to the eighth aspect, or the communication system includes one or more communication apparatuses shown in the ninth aspect to the twelfth aspect.

For technical effects brought by any one of the fifth aspect, the ninth aspect, the thirteenth aspect, the fourteenth aspect, the fifteenth aspect, the sixteenth aspect, or the possible implementations of the fifth aspect, the ninth aspect, the thirteenth aspect, the fourteenth aspect, the fifteenth aspect, or the sixteenth aspect, refer to technical effects brought by the first aspect or the different possible implementations of the first aspect.

For technical effects brought by any one of the sixth aspect, the tenth aspect, the thirteenth aspect, the fourteenth aspect, the fifteenth aspect, the sixteenth aspect, or the possible implementations of the sixth aspect, the tenth aspect, the thirteenth aspect, the fourteenth aspect, the fifteenth aspect, or the sixteenth aspect, refer to technical effects brought by the second aspect or the different possible implementations of the second aspect.

For technical effects brought by any one of the seventh aspect, the eleventh aspect, the thirteenth aspect, the fourteenth aspect, the fifteenth aspect, the sixteenth aspect, or the possible implementations of the seventh aspect, the eleventh aspect, the thirteenth aspect, the fourteenth aspect, the fifteenth aspect, or the sixteenth aspect, refer to technical effects brought by the third aspect or the different possible implementations of the third aspect.

For technical effects brought by any one of the eighth aspect, the twelfth aspect, the thirteenth aspect, the fourteenth aspect, the fifteenth aspect, the sixteenth aspect, or the possible implementations of the eighth aspect, the twelfth aspect, the thirteenth aspect, the fourteenth aspect, the fifteenth aspect, or the sixteenth aspect, refer to technical effects brought by the fourth aspect or the different possible implementations of the fourth aspect.

It can be seen from the foregoing technical solutions that, embodiments of this application have the following advantages: The IAB donor obtains the configuration information of the BH RLC CH between the first IAB node and the source parent node of the first IAB node, and sends the configuration information of the BH RLC CH to the target parent node of the first IAB node. After the parent node of the first IAB node changes from the source parent node to the target parent node, the target parent node of the first IAB node may further determine, by using the configuration information of the BH RLC CH, the configuration of the BH RLC CH between the first IAB node and the target parent node. To be specific, when the target parent node of the first IAB node determines that the configuration information of the BH RLC CH from the IAB donor may be used for the communication with the first IAB node, the configuration information of the BH RLC CH does not need to be sent to the first IAB node. In this way, the first IAB node can perform communication in the IAB network through the target parent node of the first IAB node, and this reduces the resource configuration overheads. When the target parent node of the first IAB node determines that the configuration information of the BH RLC CH from the IAB donor is not used for the communication with the first IAB node, the configuration information of the BH RLC CH corresponding to the first IAB node may be generated based on the air interface resource of the parent node, and the first IAB node can perform communication in the IAB network through the target parent node of the first IAB node. In this way, the parent node may flexibly configure the communication resource of the first IAB node based on the configuration information of the BH RLC CH from the IAB donor.

### BRIEF DESCRIPTION OF DRAWINGS

FIG. 1 is a diagram of an architecture of a communication system to which the technical solutions of this application are applied;
FIG. 2 is a schematic diagram of a control plane protocol stack;
FIG. 3 is a schematic diagram of a user plane protocol stack;
FIG. 4 is a schematic diagram of a two-hop data backhaul scenario in an IAB system;
FIG. 5 is another schematic diagram of a control plane protocol stack;
FIG. 6 is another schematic diagram of a user plane protocol stack;
FIG. 7 is a schematic diagram of an implementation of a scenario for establishing an F 1;
FIG. 8 is a schematic diagram of an intra-donor-CU migration scenario;
FIG. 9 is a schematic diagram of an intra-donor-CU re-establishment procedure;
FIG. 10-1 is a schematic diagram of an inter-donor-CU migration scenario according to an embodiment of this application;
FIG. 10-2 is another schematic diagram of an inter-donor-CU migration scenario according to an embodiment of this application;
FIG. 10-3 is another schematic diagram of an inter-donor-CU migration scenario according to an embodiment of this application;
FIG. 10-4 is a schematic diagram of an inter-donor-CU migration scenario according to an embodiment of this application;
FIG. 11 is a schematic diagram of a communication method applied to an integrated access and backhaul IAB system according to an embodiment of this application;
FIG. 12 is another schematic diagram of a communication method applied to an integrated access and backhaul IAB system according to an embodiment of this application;
FIG. 13 is another schematic diagram of a communication method applied to an integrated access and backhaul IAB system according to an embodiment of this application;
FIG. 14 is another schematic diagram of a communication method applied to an integrated access and backhaul IAB system according to an embodiment of this application;
FIG. 15 is another schematic diagram of a communication method applied to an integrated access and backhaul IAB system according to an embodiment of this application;
FIG. 16 is a schematic diagram of a communication apparatus according to an embodiment of this application;
FIG. 17 is another schematic diagram of a communication apparatus according to an embodiment of this application; and
FIG. 18 is a schematic diagram of an inter-donor according to an embodiment of this application.

### DESCRIPTION OF EMBODIMENTS

The following clearly and completely describes the technical solutions in embodiments of this application with reference to accompanying drawings in embodiments of this application.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, in the descriptions of this application, "a plurality of" means two or more than two unless otherwise specified. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

First, some terms in embodiments of this application are explained and described, to facilitate understanding of a person skilled in the art.
1. Communication system: The communication system includes but is not limited to a narrowband internet of things (narrow band-internet of things, NB-IoT) system, a wireless local area network (wireless local access network, WLAN) system, an LTE system, a next-generation 5G mobile communication system, or a communication system after 5G, for example, NR or a device to device (device to device, D2D) communication system.
2. Network device: The network device is also referred to as a base station, and includes but is not limited to an evolved NodeB (evolved node base, eNB), a radio network controller (radio network controller, RNC), a NodeB (NodeB, NB), a base station controller (base station controller, BSC), a base transceiver station (base transceiver station, BTS), a home evolved NodeB (home evolved NodeB, or home NodeB, HNB), a baseband unit (baseband Unit, BBU), an evolved (evolved LTE, eLTE) base station, an NR base station (next generation NodeB, gNB), and the like.
3. Terminal device: The terminal device includes but is not limited to any one of user equipment (user equipment, UE), a mobile station, an access terminal, a subscriber unit, a subscriber station, a mobile station, a remote station, a remote terminal, a mobile device, a terminal, a wireless communication device, a user agent, a station (station, ST) in a wireless local area network (wireless local access network, WLAN), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a mobile station in a future 5G network, a terminal device in a future evolved public land mobile network (public land mobile network, PLMN) network, and the like.
4. Wireless backhaul node: The wireless backhaul node (which may also be referred to as an IAB node) is configured to provide a wireless backhaul (backhaul) service for a node (for example, a terminal) wirelessly accessing the wireless backhaul node. The wireless backhaul service is a data and/or signaling backhaul service provided through a wireless backhaul link. The wireless backhaul node may be an IAB node, or may be a relay node (relay). This is not limited in the solutions of this application. The wireless backhaul node may be one of the foregoing base stations or terminal devices that have a forwarding function, or may be in an independent device form. In a network including the wireless backhaul node (where an IAB network is used as an example for description), the wireless backhaul node may provide a wireless access service for the terminal, and is connected to a donor base station (donor gNB) through the wireless backhaul link to transmit service data of a user

For example, the wireless backhaul node may alternatively be a device such as customer premises equipment (customer premises equipment, CPE for short) or a residential gateway (residential gateway, RG for short). In this case, the method provided in embodiments of this application may further be applied to a home access (home access) scenario

Further, concepts involved in an IAB system are briefly described below.

Link: The link is a path between two neighboring nodes on a path.

Access link: The access link is a link between a terminal device and a base station, a link between a terminal device and an IAB node, a link between a terminal device and a donor node, or a link between a terminal device and a donor DU. Alternatively, the access link includes a wireless link used when an IAB node serves as a common terminal device to communicate with a parent node of the IAB node. When serving as the common terminal device, the IAB node does not provide a backhaul service for any child node. The access link includes an uplink access link and a downlink access link. In this application, an access link of a terminal device is a wireless link. Therefore, the access link may also be referred to as a wireless access link.

Backhaul link: The backhaul link is a link between an IAB node and a parent node when the IAB node serves as a wireless backhaul node, or a link between an IAB node and a parent node. When serving as the wireless backhaul node, the IAB node provides a wireless backhaul service for a child node. The backhaul link includes an uplink backhaul link and a downlink backhaul link. In this application, a backhaul link between an IAB node and a parent node is a wireless link. Therefore, the backhaul link may also be referred to as a wireless backhaul link.

Parent node and child node: Each IAB node considers a neighboring node that provides a wireless access service and/or a wireless backhaul service for the IAB node as a parent node (parent node). Correspondingly, each IAB node may be considered as a child node (child node) of the parent node of the IAB node.

Alternatively, the child node may also be referred to as a lower-level node or a downstream node, and the parent node may also be referred to as an upper-level node or an upstream node.

Access IAB node: The access IAB node is an IAB node accessed by a terminal, or an IAB node that provides an access service for a terminal device.

Intermediate IAB node: The intermediate IAB node is an IAB node that provides a wireless backhaul service for another IAB node (for example, an access IAB node or another intermediate IAB node), or is an IAB node on a path between an access IAB node and an IAB donor.

F 1 interface and a protocol layer of the F1 interface: The F 1 interface is a logical interface between a DU part of an IAB node and a donor node (or a donor-CU). The F 1 interface may also be referred to as an F 1 * interface, and supports a user plane and a control plane. The protocol layer of the F 1 interface is a communication protocol layer on the F 1 interface.

For example, a user plane protocol layer of the F 1 interface may include one or more of an IP layer, a UDP layer, and a GTP-U layer.

For example, a control plane protocol layer of the F 1 interface may include one or more of an IP layer, an SCTP layer, and an FlAP layer.

Names of all nodes and messages in this application are merely names that are set for ease of description, and names in an actual network may be different. It should not be understood that names of various nodes and messages are limited in this application. On the contrary, any name having a function the same as or similar to that of a node or a message used in this application is considered as a method or an equivalent replacement of this application, and shall fall within the protection scope of this application. Details are not described below.

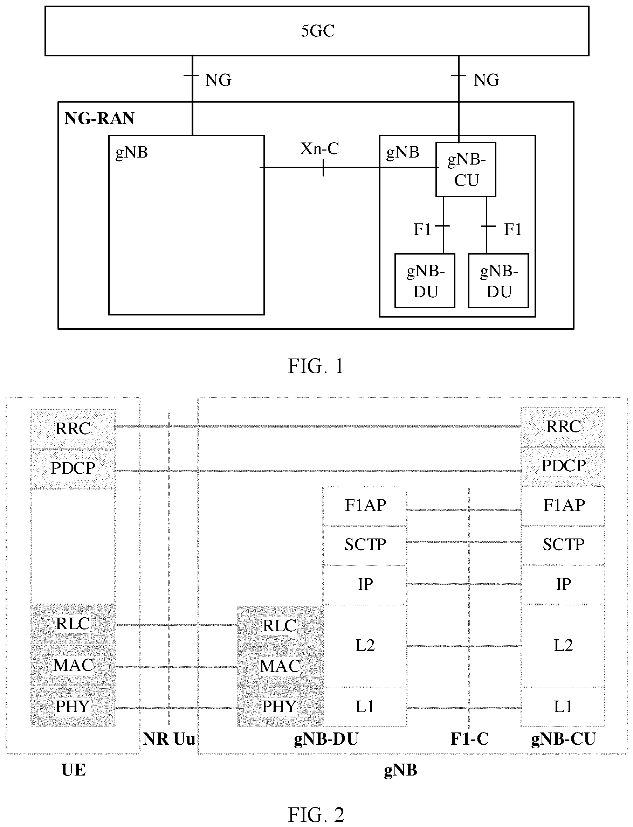

With reference to FIG. 1, an example in which a network device is a gNB is used. In a 3rd generation partnership project (3rd generation partnership project, 3GPP) Rel-15 NR, a gNB may use a central unit (central Unit, CU)-distributed unit(distributed Unit, DU) split architecture. To be specific, a gNB in a next generation radio access network (next generation radio access network, NG RAN) includes one gNB-CU and one or more gNB-DUs. One gNB-DU can be connected to only one gNB-CU, the gNB-CU is connected to the gNB-DU through an F1 interface, and the gNB-CU is connected to a 5GC (5G core network) through a next generation (next generation, NG) interface. This is shown in FIG. 1.

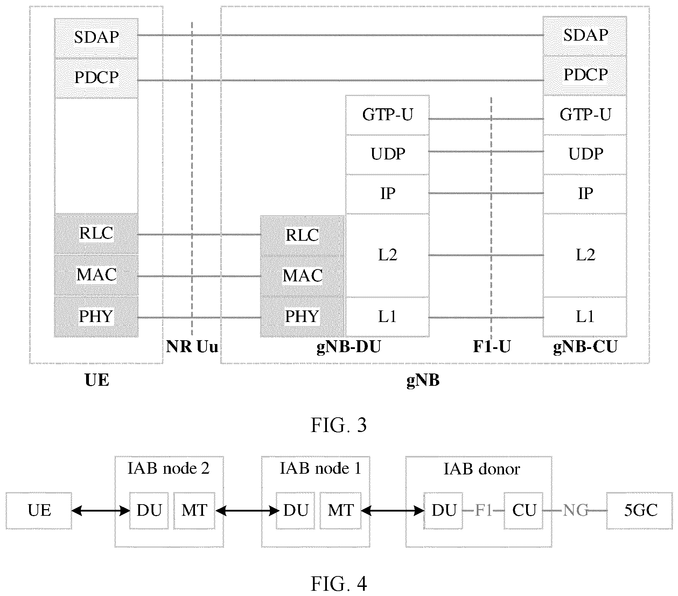

Further, for example, a terminal device is UE. The UE may access the gNB-CU through the gNB-DU shown in FIG. 1. To be specific, a peer physical (physical, PHY) layer/media access control (media access control, MAC) layer/radio link control (radio link control, RLC) layer function of the UE is located on the gNB-DU, and a peer packet data convergence protocol (packet data convergence protocol, PDCP) layer/service data adaptation protocol (Service Data Adaptation Protocol, SDAP) layer/radio resource control (radio resource control, RRC) layer function of the UE is located on the gNB-CU. Details are shown in FIG. 2 and FIG. 3.

With reference to FIG. 2, for control plane data, in an uplink (uplink, UL) direction, a gNB-DU encapsulates an RRC message generated by UE in an F1AP message of an F1 interface and sends the F1AP message to a gNB-CU. In a DL direction, the gNB-CU encapsulates an RRC message in an F1 interface application layer protocol (F1 application protocol, FlAP) message and sends the message to the gNB-DU, and the gNB-DU extracts the RRC message from the FlAP message and maps the RRC message to a signaling radio bearer (signaling radio bearer, SRB) (an SRB 0/an SRB 1/an SRB 2) corresponding to a Uu interface to send the RRC message to the UE.

With reference to FIG. 3, for user plane data, in a UL direction, a gNB-DU maps, to a corresponding general packet radio service tunneling protocol (general packet radio service tunneling protocol, GTP) tunnel, a UE data packet received from a data radio bearer (data radio bearer, DRB) of a Uu interface, to send the UE data packet to a gNB-CU. In a downlink (downlink, DL) direction, the gNB-CU maps a UE data packet to a corresponding GTP tunnel to send the UE data packet to the gNB-DU, and the gNB-DU extracts the UE data packet from the GTP tunnel, and maps the UE data packet to a DRB corresponding to the Uu interface to send the UE data packet to the UE.

In addition, two types of nodes, namely, an IAB node (which is referred to as an IAB node) and an IAB donor (which is referred to as an IAB donor node, or a donor IAB node), are further introduced in 3GPP Rel-15 integrated access and backhaul (integrated access and backhaul, IAB). The IAB donor may be a gNB.

The donor node (IAB donor) may be an access network element having a complete base station function, or may be in a form in which a central unit (centralized unit, CU) and a distributed unit (distributed unit, DU) are separated, that is, the donor node includes a central unit of a donor base station and a distributed unit of the donor base station. In embodiments of this application, the central unit of the donor node is also referred to as an IAB donor CU (which is also referred to as a donor CU, or directly referred to as a CU). The distributed unit of the donor node is also referred to as an IAB donor DU (or referred to as a donor DU). The donor CU may alternatively be in a form in which a control plane (control plane, CP) (which is referred to as a CU-CP for short in embodiments of this application) and a user plane (user plane, UP) (which is referred to as a CU-UP for short in embodiments of this application) are separated. For example, the CU may include one CU-CP and one or more CU-UPs.

With reference to FIG. 4, a two-hop data backhaul scenario (where backhaul is referred to as BH for short) is used as an example. In FIG. 4, an IAB network uses a CU-DU split architecture, to be specific, an IAB donor includes an IAB donor-CU (donor-CU for short) and an IAB donor-DU (donor-DU for short), and an IAB node includes an IAB node-MT (IAB-MT for short) and an IAB node-DU (IAB-DU for short). The IAB node-MT may also be referred to as an IAB node-UE (IAB-UE for short).

For the IAB donor, a function of the donor-DU is similar to that of a gNB-DU, and a function of the donor-CU is similar to that of a gNB-CU. For the IAB node, a function of the IAB-DU is similar to that of the gNB-DU, and the IAB-DU is configured to provide an access service for a child node of the IAB-DU. The child node of the IAB-DU may be UE, or may be another IAB node. The IAB-MT has a function of UE, and is configured to provide data backhaul for a child node of a co-site IAB-DU (that is, the IAB-DU and the IAB-MT belong to a same IAB node).

Further, the IAB node may be further classified into an access IAB node and an intermediate IAB node. To be specific, an IAB node accessed by the UE is referred to as the access IAB node, and an IAB node on a path between the access IAB node and the IAB donor is referred to as the intermediate IAB node.

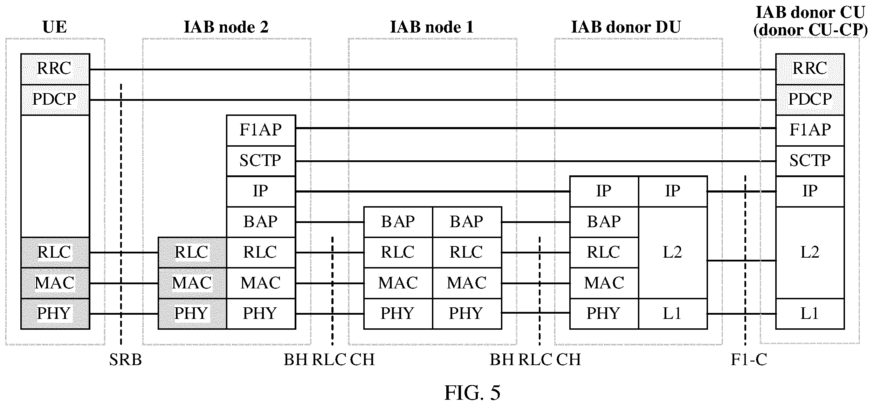

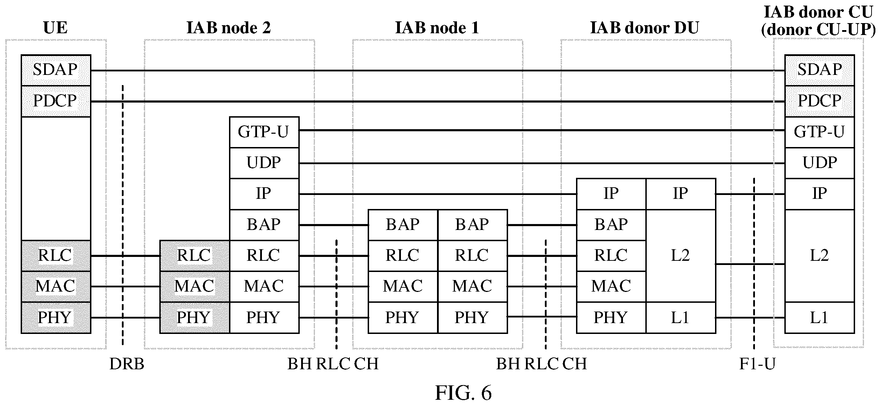

As shown in FIG. 4, UE accesses an IAB node 2. The IAB node 2 is referred to as an access IAB node of the UE (or a parent node of the UE), the UE is referred to as a child node of the IAB node 2, and a link between the UE and the IAB node 2 is referred to as an access link. An IAB node 1 is referred to as an intermediate IAB node. A parent node of the IAB node 1 is an IAB donor (where a child node of the IAB donor is the IAB node 1). A child node of the IAB node 1 is the IAB node 2 (where a parent node of the IAB node 2 is the IAB node 1). A link between the IAB node 1 and the IAB node 2 and a link between the IAB node 1 and the IAB donor are all referred to as backhaul links. A peer PHY layer, MAC layer, and RLC layer of the UE are located on the access IAB node (namely, an IAB 2-DU), and a peer PDCP layer, SDAP layer, and RRC layer of the UE are located on a donor-CU. All IAB nodes use an L2 data forwarding architecture. A specific user plane protocol stack and a specific control plane protocol stack are respectively shown in FIG. 5 and FIG. 6.

With reference to FIG. 5, in a control plane protocol stack based on two-hop data backhaul shown in FIG. 4, an F1 interface is established between the access IAB node (namely, the IAB node 2-DU) and the IAB donor (namely, the IAB donor-CU). Specifically, if the IAB donor uses a CP-UP split architecture, an F1-C interface is established between the IAB node 2-DU and a donor CU-CP. An RRC message of the UE is encapsulated in an FlAP message of the F1-C interface for transmission.

With reference to FIG. 6, in a control plane protocol stack based on two-hop data backhaul shown in FIG. 4, if the IAB donor uses a CP-UP split architecture, an F1-U interface is established between the IAB node 2-DU and a donor CU-UP, and a GTP tunnel of per UE bearer (per UE bearer) is established on the F1-U interface. In other words, each UE DRB established on an interface between the UE and the IAB node 2-DU corresponds to a separate GTP tunnel on the interface between the IAB 2-DU and the donor CU-UP.

As shown in FIG. 6, in a protocol architecture shown in FIG. 6, meanings of protocol layers are: a packet data convergence protocol (packet data convergence protocol, PDCP) layer, a general packet radio service tunneling protocol-user plane (general packet radio service tunneling protocol user plane, GTP-U) layer, a user datagram protocol (user datagram protocol, UDP) layer, an internet protocol (internet protocol, IP) layer, an L2 layer (layer 2), an L1 layer (layer 1), a radio link control (radio link control, RLC) layer, a media access control (media access control, MAC) layer, a physical (physical, PHY) layer, a radio resource control (radio resource control, RRC) layer, an F1 application protocol (F1 application protocol, F1AP) layer, and a stream control transmission protocol (stream control transmission protocol, SCTP) layer. The L2 layer is a link layer. For example, the L2 layer may be a data link layer in an open systems interconnection (open systems interconnection, OSI) reference model. The L1 layer may be a physical layer. For example, the L1 layer may be a physical layer in the OSI reference model.

To satisfy service quality requirements of different types of services of a terminal device, one or more radio bearers (radio bearers, RBs) are introduced to a wireless network. The radio bearer includes a data radio bearer (data radio bearer, DRB) and a signaling radio bearer (signaling radio bearer, SRB), and is used to transmit different types of service data (including control plane signaling and user plane data) between UE and a base station. In an IAB network, an RB may be considered as a logical channel for data transmission between the UE and a donor node.

A protocol layer entity corresponding to each protocol layer is configured for each protocol layer, for example, a PDCP entity, an RLC entity, and a MAC entity. In uplink transmission, after corresponding processing is performed on a data packet (for example, an IP data packet) of the UE at a PDCP layer, the data packet is sent to a PHY layer of an access backhaul node (for example, the IAB node 2 shown in FIG. 4) through an RLC layer, a MAC layer, and a PHY layer in sequence.

As described above, in the IAB network, the IAB node may include a DU part and an MT part. When the IAB node is used as a wireless backhaul node, the MT part of the IAB node performs data forwarding on a backhaul link without requiring a complete protocol stack of a terminal device on a wireless access link. When the IAB node serves as a wireless terminal, a protocol stack of a communication link between the IAB node and a parent node is the same as a protocol stack of a radio access link between UE and an IAB node accessed by the UE, and a protocol stack between the IAB node and a donor CU is the same as a protocol stack between the UE and the donor CU.

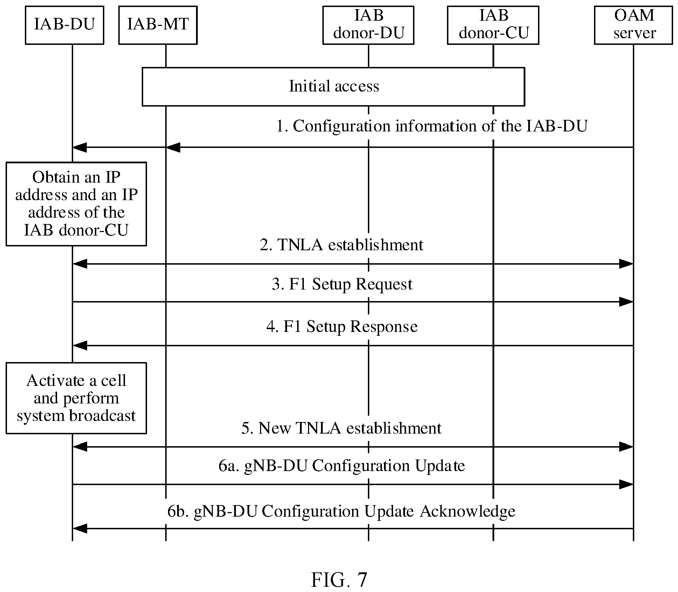

Similar to 3GPP Rel-15 NR, in R16 IAB, one IAB-DU can be connected to only one IAB donor-CU to establish an F1 connection. A scenario in which an IAB node is directly connected to an IAB donor is used as an example for description. As shown in FIG. 7, the following steps are included.

Step 1: After accessing a network (namely, initial access) through the IAB donor, an IAB-MT may obtain configuration information of an IAB-DU from an operations, administration and maintenance (operations, administration and maintenance, OAM) server through the accessed IAB donor. The configuration information includes at least one type of the following information: an identifier (an IAB-DU id or an IAB-DU name) of the IAB-DU, cell information (a physical cell identifier (physical cell identifier, PCI) of a cell of the IAB-DU, a cell identity (cell identity) of the cell, and synchronization signal/physical broadcast channel block (synchronization signal/physical broadcast channel block, SS/PBCH block or SSB) information of the cell) of the IAB-DU, and a peer internet protocol (internet protocol, IP) address (an IP address of an IAB donor-CU) of an F1 interface of the IAB-DU.

In addition, the IAB-DU may further obtain a local IP address of the F1 interface of the IAB-DU through the OAM, or the IAB-DU requests, through the IAB-MT, to obtain the local IP address of the F1 interface of the IAB-DU from the accessed IAB donor.

Step 2: The IAB-DU uses the obtained IP address to establish a TNLA association with the IAB donor-CU.

Step 3: The IAB-DU triggers an F1 setup request (F1 Setup Request) message to the IAB donor-CU based on the established TNLA association, and reports the configuration information obtained from the OAM to the IAB donor-CU, to establish an F1 connection to the IAB donor-CU.

Step 4: The IAB donor-CU sends an F1 setup response (F1 Setup Response) message to the IAB-DU, to activate a specified cell of the IAB-DU, to start an IAB-DU function. For example, the activated cell of the IAB-DU starts to perform system broadcast.

Step 5: If the IP address of the IAB-DU is updated, a new IP address is used to establish a new TNLA association with the IAB donor-CU.

Step 6: The IAB-DU triggers a gNB-DU configuration update (Configuration Update) procedure to the IAB donor-CU based on the new TNLA association, that is, the IAB-DU sends a gNB-DU configuration update message to the IAB donor-CU in step 6a, and the IAB donor-CU sends a gNB-DU configuration update acknowledge (Acknowledge) message to the IAB-DU in step 6b, to notify the IAB donor-CU to update the TNLA association. Optionally, an old TNLA association between the IAB-DU and the IAB donor-CU may also be deleted in this procedure.

In addition, in the current R16 IAB, only an intra-donor-CU (Intra-donor-CU) re-establishment scenario is considered, and an inter-donor-CU (Inter-donor-CU) re-establishment scenario is not considered.

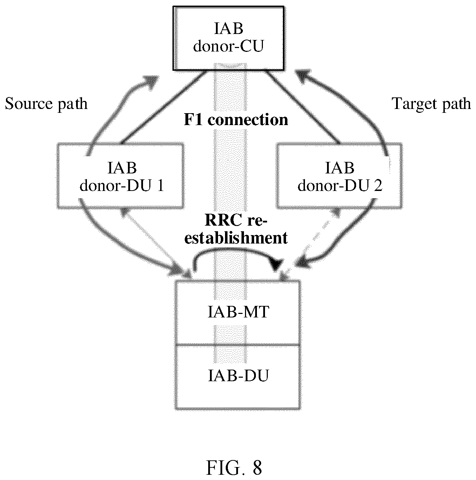

With reference to FIG. 8, in an intra-donor-CU re-establishment scenario, if an IAB-MT detects that an RLF occurs on a link between the IAB-MT and an IAB donor-DU 1, the IAB-MT performs cell selection, and performs link recovery through RRC re-establishment at a cell of an IAB donor-DU 2, where the IAB donor-DU 1 and the IAB donor-DU 2 are connected to a same IAB donor-CU.

As shown in FIG. 8, an IAB node includes two parts: the IAB-MT and an IAB-DU. In this embodiment of this application, an IAB node that detects a radio link failure (radio link failure, RLF) or an IAB node that detects a link RLF and attempts to recover may be collectively referred to as a recovery IAB node (recover IAB node). An IAB-MT part of the recovery IAB node is referred to as a recovery IAB-MT for short, and an IAB-DU part of the recovery IAB node is referred to as a recovery IAB-DU for short.

Similar to UE, before the RLF on a link, the recovery IAB-MT is connected to a source IAB donor, that is, connected to the IAB donor-CU through the IAB donor-DU 1. After the RLF on the link, the recovery IAB-MT performs link recovery through RRC re-establishment at a target IAB donor, that is, connecting to the IAB donor-CU through the IAB donor-DU 2.

The IAB donor-CU remains unchanged before and after the recovery IAB-MT triggers an RRC re-establishment procedure to recover the link. Therefore, an F1 connection between the recovery IAB-DU and the IAB donor-CU remains unchanged.

In addition, an IP address of the recovery IAB-DU is allocated by an IAB donor-DU or the IAB donor-CU, that is, the IP address of the recovery IAB-DU needs to belong to a same network segment or have a same network prefix as an IP address of the IAB donor-DU. Therefore, once the IAB donor-DU changes, the IP address of the recovery IAB-DU changes.

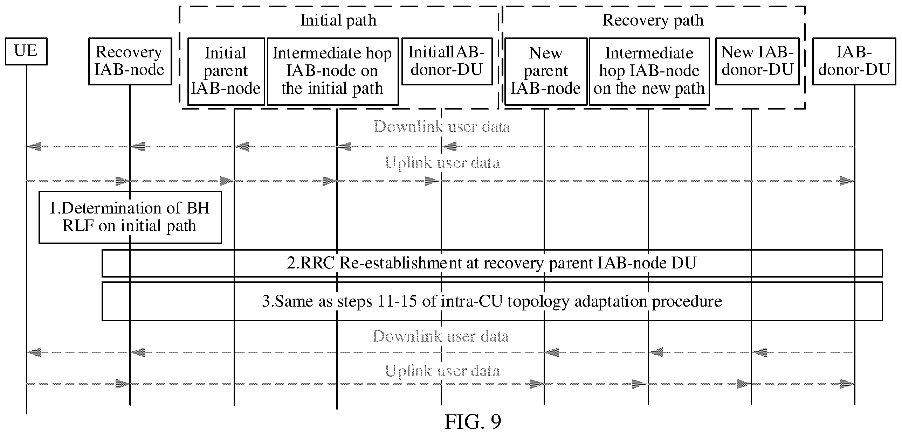

With reference to FIG. 9, a multi-hop scenario (where at least one another IAB node exists between a recovery IAB node and an IAB donor-DU) is used as an example. In an IAB intra-CU re-establishment procedure shown in FIG. 9, a source path (initial Path) refers to a transmission path between a source parent node and a source IAB donor-DU, where the initial path includes the source parent node (Initial Parent IAB-node), an intermediate node on the source path (Intermediate hop IAB-node on the initial path), and the source IAB-donor-DU (Initial IAB-donor-DU). A target path/recovery path (Recovery Path) refers to a transmission path between a target parent node and a target IAB donor-DU, where the recovery path includes the target parent node (New Parent IAB-node), an intermediate node on the target path (Intermediate hop IAB-node on the New path), and the target IAB-donor-DU (New IAB-donor-DU). A specific migration procedure is shown in FIG. 9.

Before step 1, an IAB-donor-CU may exchange uplink user data (Uplink user data) and downlink user data (Downlink user data) with UE through the source path.

Step 1: A recovery IAB-MT detects that a BH-RLF occurs on the source path, that is, the recovery IAB-MT performs determination of the BH RLF on the source path (Determination of BH RLF on initial path).

Step 2: The recovery IAB-MT performs link recovery by triggering RRC re-establishment at the new parent node, that is, the recovery IAB-MT performs the RRC re-establishment at the target IAB-donor-DU (RRC Re-establishment at recovery parent IAB-node DU). In this process, the IAB-donor-CU may provide a new TNL address for the recovery IAB-MT based on an RRC message. Further, the IAB-donor-CU may further provide a default UL configuration for the recovery IAB-MT based on an RRC reconfiguration message. The default UL configuration includes: a configured default BH RLC channel that is used for UL F1-C/non-F1 service transmission and that is on the target path, a default backhaul adaptation protocol routing ID (backhaul adaptation protocol routing ID, BAP routing ID), and the like.

Step 3: Remaining procedures are same as steps 11 to 15 in an intra-CU migration procedure (Same as steps 11-15 of intra-CU topology adaptation procedure). An implementation process of steps 11 to 15 may include the following steps.

Step 11: The IAB-donor-CU configures a corresponding BH RLC channel and BAP route configuration for the target path of the recovery IAB-MT, and configures a DL bearer mapping on the target IAB donor-DU for the recovery IAB-MT.

Step 12: An F1-C connection is updated to use a new IP address of a recovery IAB-DU. The IAB-donor-CU updates UL BH information associated to each GTP tunnel to the recovery IAB-DU, that is, all F1-U tunnels are updated to use the new IP address of the recovery IAB-DU.

Step 13: The IAB-donor-CU sends a UE context release command (UE Context Release Command) message to the source parent node of the recovery IAB-MT.

Step 14: The source parent node of the recovery IAB-MT releases a context of the recovery IAB-MT, and responds to the IAB-donor-CU with a UE context release complete (UE Context Release Complete) message.

Step 15: The IAB-donor-CU releases a BH RLC channel and backhaul adaptation protocol (backhaul adaptation protocol, BAP) routing configuration information on the source path between the source parent node of the recovery IAB-MT and the source IAB donor-DU.

In the intra-donor-CU RRC re-establishment scenarios shown in FIG. 8 and FIG. 9, a parent node connected to the recovery IAB node changes, that is, changes from the IAB donor-DU 1 to the IAB donor-DU 2. In addition, in an actual communication process, quality of a link between two communication nodes may change. For example, a migration failure, a radio link failure RLF, an integrity protection failure, or an RRC reconfiguration failure occurs. In this case, a parent node connected to an IAB node may change. In other words, the IAB node releases a connection to a source parent node of a first IAB node, and establishes a new connection to a target parent node. The source parent node or the target parent node may be an intermediate IAB node between the IAB node and an IAB donor, or may be an IAB donor DU in the IAB donor.

However, in an IAB network, when a parent node connected to an IAB node changes, how to flexibly configure a communication resource of the IAB node is an urgent problem to be resolved.

In addition, in the current IAB network, only an intra-donor-CU RRC re-establishment scenario is considered, that is, an IAB donor-CU remains unchanged. Therefore, cell configuration information of a recovery IAB-DU remains unchanged, and an F1 connection between the recovery IAB-DU and the IAB donor-CU remains unchanged. Similarly, cell configuration information of a child node (for example, another IAB node) of a recovery IAB node remains unchanged, and an F1 connection between the child node of the recovery IAB node and the IAB donor-CU also remains unchanged.

However, an inter-donor-CU RRC re-establishment scenario is also typical. For example, the following describes inter-donor-CU RRC re-establishment scenarios in embodiments of this application with reference to figures.

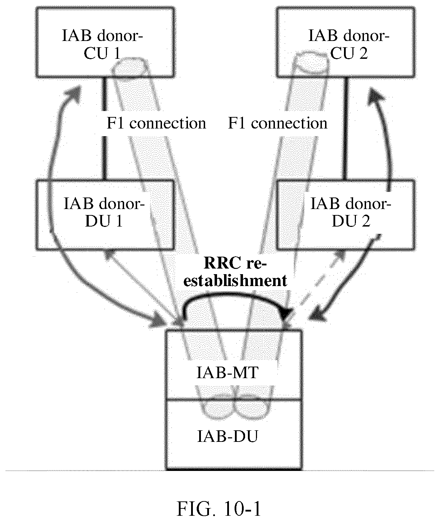

FIG. 10-1 is an example of an inter-donor-CU RRC re-establishment scenario. In this scenario, before at least one of the following procedures is triggered: an RRC re-establishment procedure, an F1 connection establishment procedure, or an F1 connection re-establishment procedure, a recovery IAB-MT is connected to a source IAB donor-CU (for example, an IAB donor-CU 1 in FIG. 10-1) through a source IAB donor-DU (for example, an IAB donor-DU 1 in FIG. 10-1). After the at least one of the following procedures is triggered: the RRC re-establishment procedure, the F 1 connection establishment procedure, or the F 1 connection re-establishment procedure, the recovery IAB-MT is connected to a target IAB donor-CU (for example, an IAB donor-CU 2 in FIG. 10-1) through a target IAB donor-DU (for example, an IAB donor-DU 2 in FIG. 10-1).

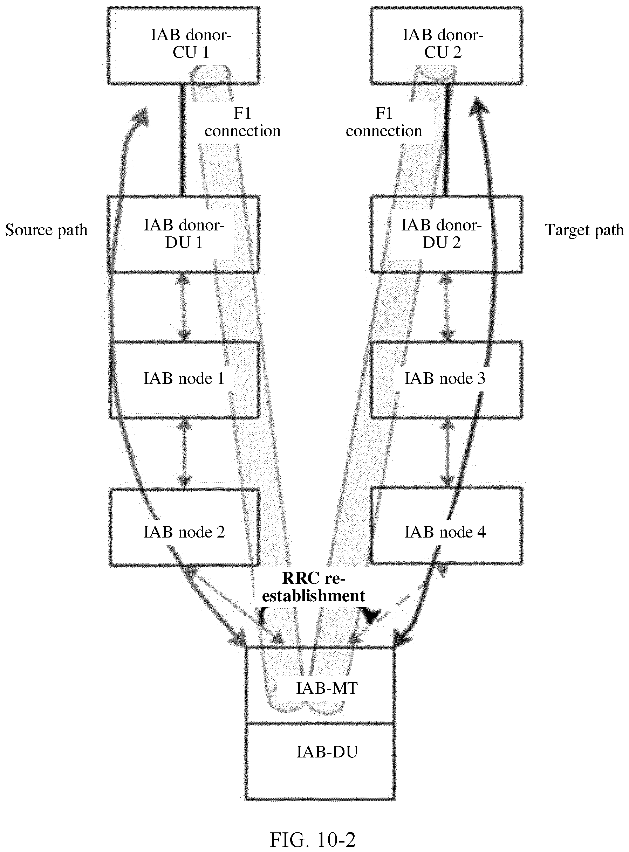

FIG. 10-2 is another example of an inter-donor-CU RRC re-establishment scenario. In this scenario, the scenario shown in FIG. 10-1 is further extended, to be specific, at least one another IAB node exists between a recovery IAB node and an IAB donor-DU. As shown in FIG. 10-2, before at least one of the following procedures is triggered: an RRC re-establishment procedure, an F 1 connection establishment procedure, or an F 1 connection re-establishment procedure, an IAB node 1 and an IAB node 2 are other IAB nodes (which may be referred to as intermediate IAB nodes) existing between the recovery IAB node and a source IAB donor-DU (for example, an IAB donor-DU 1 in FIG. 10-2), and an IAB node 3 and an IAB node 4 are other IAB nodes (which may be referred to as intermediate IAB nodes) existing between the recovery IAB node and a target IAB donor-DU (for example, an IAB donor-DU 2 in FIG. 10-2).

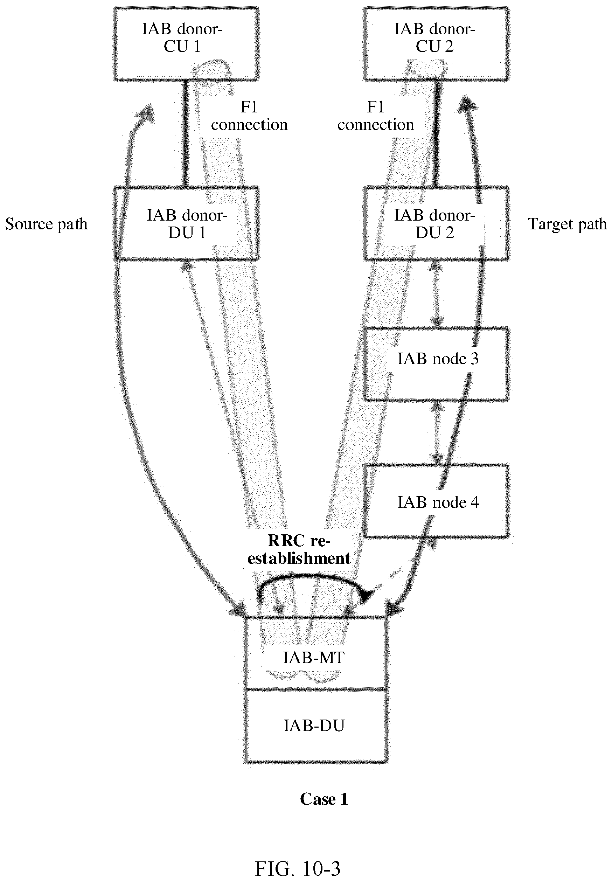

FIG. 10-3 is another example of an inter-donor-CU RRC re-establishment scenario. In this scenario, the scenarios shown in FIG. 10-1 and FIG. 10-2 are further extended. Specifically, in case 1 (Case 1), before at least one of the following procedures is triggered: an RRC re-establishment procedure, an F 1 connection establishment procedure, or an F 1 connection re-establishment procedure, a recovery IAB-MT is directly connected to a source IAB donor-DU. After the at least one of the following procedures is triggered: the RRC re-establishment procedure, the F 1 connection establishment procedure, or the F1 connection re-establishment procedure, the recovery IAB-MT is connected to a target IAB donor-DU through at least one another IAB node.

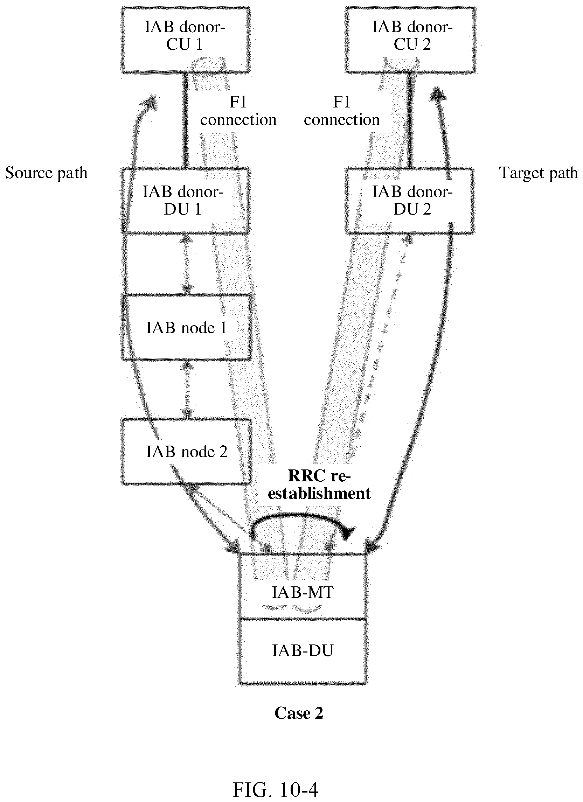

FIG. 10-4 is another example of an inter-donor-CU RRC re-establishment scenario. In this scenario, the scenarios shown in FIG. 10-1 and FIG. 10-2 are further extended. Specifically, in case 2 (Case 2), before at least one of the following procedures is triggered: an RRC re-establishment procedure, an F 1 connection establishment procedure, or an F1 connection re-establishment procedure, a recovery IAB-MT is connected to a source IAB donor-DU through at least one another IAB node. After the at least one of the following procedures is triggered: the RRC re-establishment procedure, the F 1 connection establishment procedure, or the F 1 connection re-establishment procedure, the recovery IAB-MT is directly connected to a target IAB donor-DU.

In the above examples, a child node of the recovery IAB node may be UE or another IAB node. In addition, in the foregoing RRC re-establishment scenarios, a path between the recovery IAB-MT and the source IAB donor-CU (for example, the IAB donor-CU 1 in the figures) is referred to as a source path (source path), and a path between the recovery IAB-MT and the target IAB donor-CU (for example, the IAB donor-CU 2 in the figures) is referred to as a target path or a recovery path (target path).

It is clear that in the shown inter-donor-CU scenarios, an IAB donor-CU changes, and consequently, an F1 connection of a recovery IAB-DU changes (where currently, only one DU can be connected to one CU to establish one F1 connection). To be specific, before at least one of the following procedures is triggered: an RRC re-establishment procedure, an F1 connection establishment procedure, or an F1 connection re-establishment procedure, the recovery IAB-DU establishes an F1 connection to the source IAB donor-CU. After the at least one of the following procedures is triggered: the RRC re-establishment procedure, the F1 connection establishment procedure, or the F1 connection re-establishment procedure, the recovery IAB-DU needs to establish/re-establish an F1 connection to the target IAB donor-CU, and release the F1 connection to the source IAB donor-CU. Similarly, a descendant node (for example, another IAB node) of the recovery IAB node also needs to establish/re-establish an F1 connection to the target IAB donor-CU, but the current IAB node does not support a procedure of changing an F1 connection.

To sum up, the IAB network has at least the following problems.

Problem 1: When a parent node connected to an IAB node changes, that is, when the IAB node releases a connection to a source parent node, and establishes a new connection to a target parent node, because the parent node connected to the IAB node changes, a link resource between the IAB node and the target parent node needs to be reconfigured. How to flexibly configure a communication resource of the IAB node is an urgent problem to be resolved.

Problem 2: After an IAB node detects that an RLF occurs on a link between the IAB node and a source parent node, the IAB node triggers an RRC re-establishment procedure. However, because quality of a link between the IAB node and a child node of the IAB node is still good, the child node cannot trigger the RRC re-establishment procedure and cannot work normally. However, the current IAB node does not support the procedure of changing the F1 connection. Therefore, how to support the changing the F1 connection in the inter-donor-CU scenario and how to notify the child node of the IAB node to trigger the RRC re-establishment procedure are also technical problems that urgently need to be resolved.

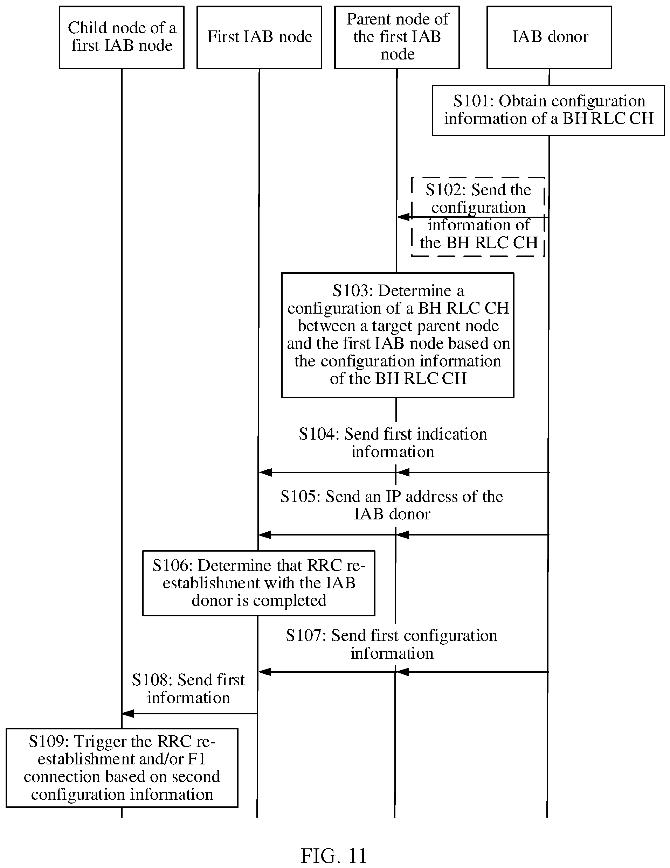

To resolve the foregoing problems, an embodiment of this application provides a communication method applied to an integrated access and backhaul IAB system. With reference to FIG. 11, the communication method applied to the integrated access and backhaul IAB system includes the following steps.

S101: An IAB donor obtains configuration information of a BH RLC CH.

In this embodiment, the IAB donor obtains, in step S101, the configuration information of the BH RLC CH. The configuration information of the BH RLC CH is configuration information of a BH RLC CH between a first integrated access and backhaul IAB node and a source parent node of the first IAB node.

Specifically, the configuration information, of the BH RLC CH, obtained by the IAB donor in step S101 may include at least one of the following: an identifier of the BH RLC CH, a logical channel identifier corresponding to the BH RLC CH, radio link control RLC configuration information, or logical channel configuration information.

In step S101, the configuration information of the BH RLC CH is the configuration information of the BH RLC CH between the first IAB node and the source parent node of the first IAB node, where a parent node of the first IAB node may change in a plurality of different scenarios.

In a possible implementation, in intra-donor-CU RRC re-establishment scenarios shown in FIG. 8 and FIG. 9, a parent node connected to the recovery IAB node (namely, the first IAB node) changes, to be specific, changes from the IAB donor-DU 1 to the IAB donor-DU 2. In addition, in an actual communication process, quality of a link between two communication nodes may change. For example, a migration failure, a radio link failure RLF, an integrity protection failure, or an RRC reconfiguration failure occurs. In this case, a parent node connected to an IAB node may change. In other words, the IAB node releases a connection to a source parent node of the IAB node, and establishes a new connection to a target parent node.

Specifically, in this implementation, because the IAB donor of the first IAB node remains unchanged, the IAB donor may determine, in step S101, the configuration information of the BH RLC CH between the first IAB node and the source parent node of the first IAB node based on buffered data of the device or historical data.

In another possible implementation, in inter-donor-CU RRC re-establishment scenarios shown in FIG. 10-1, FIG. 10-2, FIG. 10-3, and FIG. 10-4, the recovery IAB-MT (namely, an MT part of the first IAB node) is connected to the source IAB donor-CU (for example, the IAB donor-CU 1 in FIG. 10-1, FIG. 10-2, FIG. 10-3, and FIG. 10-4) through the source IAB donor-DU (for example, the IAB donor-DU 1 in the FIG. 10-1, FIG. 10-2, FIG. 10-3, and FIG. 10-4). After the at least one of the following procedures is triggered: the RRC re-establishment procedure, the F 1 connection establishment procedure, or the F 1 connection re-establishment procedure, the recovery IAB-MT is connected to the target IAB donor-CU (for example, the IAB donor-CU 2 in FIG. 10-1, FIG. 10-2, FIG. 10-3, and FIG. 10-4) through the target IAB donor-DU (for example, the IAB donor-DU 2 in the FIG. 10-1, FIG. 10-2, FIG. 10-3, and FIG. 10-4).

Specifically, in this implementation, the IAB donor of the first IAB node changes, to be specific, changes from a source IAB donor to a target IAB donor. The IAB donor may be the target IAB donor, a target parent node of the first IAB node is connected to the target IAB donor, and the source parent node of the first IAB node is connected to the source IAB donor. An IAB donor connected to the source parent node of the first IAB node is the source IAB donor, and an IAB donor connected to the target parent node of the first IAB node is the target IAB donor. Therefore, this solution may be applied to a scenario in which the IAB donor connected to the first IAB node changes, for example, an inter-CU (Inter-donor-CU) RRC re-establishment scenario. In this case, because the IAB donor of the first IAB node changes, the IAB donor may determine, in step S101, the configuration information of the BH RLC CH between the first IAB node and the source parent node of the first IAB node based on a message sent by the source IAB donor of the first IAB node.

It should be noted that an IAB donor changes or a change of an IAB donor mentioned in this application specifically means an IAB donor-CU changes or a change of an IAB donor-CU.

S102: The IAB donor sends the configuration information of the BH RLC CH to the target parent node of the first IAB node.

In this embodiment, the IAB donor sends, in step S102, the configuration information of the BH RLC CH obtained in step S101 to the target parent node of the first IAB node. Correspondingly, the target parent node of the first IAB node receives, in step S102, the configuration information of the BH RLC CH from the IAB donor.

It should be noted that, in this embodiment of this application, the target parent node of the first IAB node may be an intermediate IAB node on a path between the first IAB node and the IAB donor, or may be an IAB donor DU in the IAB donor. This is not limited herein. In addition, in this embodiment and subsequent embodiments, the first IAB node may be represented by the recovery IAB node. Correspondingly, the MT part and a DU part included in the first IAB node may be represented by the recovery IAB-MT and a recovery IAB-DU respectively.

In a specific implementation, if an application scenario of the IAB donor and the first IAB node is an inter-donor-CU RRC re-establishment scenario shown in FIG. 10-1, FIG. 10-2, FIG. 10-3, or FIG. 10-4, the configuration information of the BH RLC CH in step S 102 may be carried in a message sent by the source IAB donor to the target IAB donor.

S103: The target parent node of the first IAB node determines a configuration of a BH RLC CH between the first IAB node and the target parent node based on the configuration information of the BH RLC CH.

In this embodiment, the target parent node of the first IAB node determines, in step S103, the configuration of the BH RLC CH between the first IAB node and the target parent node based on the configuration information of the BH RLC CH.

After the parent node of the first IAB node changes from the source parent node to the target parent node, the target parent node of the first IAB node may further determine, in step S103, by using the configuration information of the BH RLC CH, the configuration of the BH RLC CH between the first IAB node and the target parent node, so that the first IAB node performs communication in an IAB network through the target parent node of the first IAB node. To be specific, when the target parent node of the first IAB node determines that the configuration information of the BH RLC CH from the IAB donor may be used for communication with the first IAB node, configuration information of a BH RLC CH does not need to be sent to the first IAB node. In this way, the first IAB node can perform communication in the IAB network through the target parent node of the first IAB node, and therefore, resource configuration overheads are reduced.

Specifically, the target parent node of the first IAB node may determine the configuration of the BH RLC CH between the first IAB node and the target parent node in a plurality of manners in step S103. For example, when the target parent node determines, based on the configuration of the BH RLC CH, an air interface resource that needs to be occupied, if the target parent node has robust air interface resources, the target parent node may use the configuration of the BH RLC CH received in step S102. Otherwise, the target parent node generates configuration information of the corresponding BH RLC CH based on an air interface resource of the target parent node. In this way, the parent node may flexibly configure a communication resource of the first IAB node based on the configuration information of the BH RLC CH from the IAB donor.

S104: The IAB donor sends first indication information to the first IAB node through the target parent node of the first IAB node.

In this embodiment, the IAB donor sends, in step S104, the first indication information to the first IAB node through the target parent node of the first IAB node. Correspondingly, the first IAB node receives, in step S104, the first indication information from the IAB donor through the target parent node of the first IAB node. The first indication information indicates a change of the IAB donor connected to the first IAB node, or indicates a change of an IAB-donor-CU connected to the first IAB node.

In a specific implementation, the IAB donor sends the first indication information to the first IAB node through the target parent node, where the first indication information indicates the change of the IAB donor connected to the first IAB node. If the application scenario of the IAB donor and the first IAB node is the inter-donor-CU RRC re-establishment scenario shown in FIG. 10-1, FIG. 10-2, FIG. 10-3, or FIG. 10-4, that is, when the IAB donor is the donor node (namely, the target IAB donor) connected to the target parent node of the first IAB node, the IAB donor may further send the first indication information to the first IAB node through the target parent node of the first IAB node, so that the first IAB node determines that a donor node of the first IAB node changes, and may subsequently communicate with the target donor node in the IAB network. The configuration information of the BH RLC CH in step S104 may be carried in a message sent by the target IAB donor to the first IAB node.

S105: The IAB donor sends an IP address of the IAB donor to the first IAB node through the target parent node of the first IAB node.

In this embodiment, the IAB donor sends, in step S105, the IP address of the IAB donor to the first IAB node through the target parent node of the first IAB node. Correspondingly, the first IAB node receives, in step S105, the IP address of the IAB donor from the IAB donor through the target parent node of the first IAB node.

In a specific implementation, the IAB donor sends IP address information of the IAB donor to the first IAB node through the target parent node. If the application scenario of the IAB donor and the first IAB node is the inter-donor-CU RRC re-establishment scenario shown in FIG. 10-1, FIG. 10-2, FIG. 10-3, or FIG. 10-4, that is, when the IAB donor is the donor node (namely, the target IAB donor) connected to the target parent node of the first IAB node, the IAB donor may further send the IP address information of the target IAB donor to the first IAB node through the target parent node of the first IAB node, so that the first IAB node triggers the F 1 connection establishment/re-establishment procedure for the target IAB donor indicated by the IP address information. The IP address of the IAB donor in step S105 may be carried in the message sent by the target IAB donor to the first IAB node.

S106: The first IAB node determines that RRC re-establishment with the IAB donor is completed.

In this embodiment, the first IAB node determines, in step S 106, that the RRC re-establishment with the IAB donor is completed, and after step S106, step S107 and step S108 are performed.

S107: The IAB donor sends first configuration information to the first IAB node through the target parent node of the first IAB node.

In this embodiment, the IAB donor sends, in step S107, the first configuration information to the first IAB node through the target parent node of the first IAB node. Correspondingly, the first IAB node receives, in step S 107, the first configuration information from the IAB donor through the target parent node of the first IAB node.

Specifically, in step S106, the first IAB node may determine, in step S107, that the RRC re-establishment with the IAB donor is completed. Correspondingly, the IAB donor may also determine, in step S106, that the RRC re-establishment with the first IAB node is completed. In addition, after determining that the RRC re-establishment with the first IAB node is completed, the IAB donor may perform step S107, that is, send the first configuration information to the first IAB node through the target parent node of the first IAB node.

The first configuration information includes at least one of the following: a source identifier of a cell of the first IAB node, a target identifier of the cell of the first IAB node, a PLMN ID of the cell of the first IAB node, SSB information of the cell of the first IAB node, or activation indication information of the cell of the first IAB node. The source identifier of the cell of the first IAB node is an identifier of a cell that is under the source IAB donor and that is connected by the first IAB node through the source parent node. The target identifier of the cell of the first IAB node is an identifier of a cell that is under the target IAB donor and that is connected by the first IAB node through the target parent node.

In a specific implementation, if the application scenario of the IAB donor and the first IAB node is the inter-donor-CU RRC re-establishment scenario shown in FIG. 10-1, FIG. 10-2, FIG. 10-3, or FIG. 10-4, that is, when the IAB donor is the donor node (namely, the target IAB donor) connected to the target parent node of the first IAB node, the IAB donor may further send the first configuration information to the first IAB node through the target parent node of the first IAB node, so that the first IAB node updates a network configuration of the first IAB node based on the first configuration information, and subsequently may use the updated network configuration for communication in the IAB network.

S108: The first IAB node sends first information to a child node of the first IAB node.

In this embodiment, the first IAB node sends, in step S108, the first information to the child node of the first IAB node. Correspondingly, the child node of the first IAB node receives, in step S 108, the first information from the first IAB node. The first information includes at least one of the following: indication information indicating the change of the IAB donor connected to the first IAB node, indication information indicating the RRC re-establishment, identification information of a base station for RRC re-establishment, or identification information of a cell for RRC re-establishment.

The indication information indicating the change of the IAB donor connected to the first IAB node is indication information indicating the change of the donor-CU.

It should be noted that, in this embodiment of this application, the first IAB node is a parent node of the child node, and the child node of the first IAB node may be an IAB node, or may be a terminal device (for example, UE). This is not limited herein.

Optionally, the first IAB node may send the first information to the child node based on the first indication information obtained in step S104.

In a specific implementation, the first information is carried in a media access control control element MAC CE; or the first information is carried in a BAP control PDU.

S109: The child node of the first IAB node triggers at least one of the following procedures based on the first information: the RRC re-establishment, the F 1 connection establishment, or the F 1 connection re-establishment.

In this embodiment, the child node of the first IAB node triggers the at least one of the following procedures based on the first information received in step S108: the RRC re-establishment, the F1 connection establishment, or the F1 connection re-establishment.

In a specific implementation, before step S108 in which the first IAB node sends the first information to the child node of the first IAB node, if the F1 connection establishment between the first IAB node and the IAB donor is not completed (or the F1 connection re-establishment is not completed), in step S109, when the child node of the first IAB node triggers the RRC re-establishment or the F1 connection establishment/re-establishment based on the first information, that is, when the child node sends an RRC re-establishment request message or an F1 connection establishment/re-establishment request message to the first IAB node, the first IAB node may buffer the received request message. After determining that the F1 connection establishment/re-establishment between the first IAB node and the IAB donor is completed, the first IAB node sends the buffered request message to the IAB donor, so that RRC re-establishment or F 1 connection establishment/re-establishment between the child node and the IAB donor is completed.

In another specific implementation, before step S108 in which the first IAB node sends the first information to the child node of the first IAB node, the first IAB node may further determine that the F1 connection establishment/re-establishment with the IAB donor is completed. That is, after determining that the F1 connection establishment/re-establishment with the IAB donor is completed, the first IAB node sends the first information to the child node of the first IAB node, so that the child node may trigger, in step S109, the RRC re-establishment or the F1 connection establishment/re-establishment for the IAB donor based on the first information based on the established/re-established F1 connection between the first IAB node and the IAB donor.

Based on the foregoing technical solution, after the first IAB node determines that the RRC re-establishment with the target IAB donor is completed, that is, after a donor node of the first node changes to the target IAB donor, the first IAB node sends the first information to the child node of the first IAB node, so that the child node of the first IAB node triggers the RRC re-establishment and/or the establishment/re-establishment of the F1 connection to the target IAB donor based on the first information, so that the child node of the first IAB node performs communication in the IAB network through the first IAB node. That is, according to the foregoing solution, the first IAB node obtains the new configuration, and notifies a descendant node (the child node) to trigger the RRC re-establishment procedure, so that after the recovery IAB node performs the RRC re-establishment to the new IAB donor, the descendant node of the recovery IAB node can still work normally, and establishes/re-establishes the F1 connection to the target IAB donor.

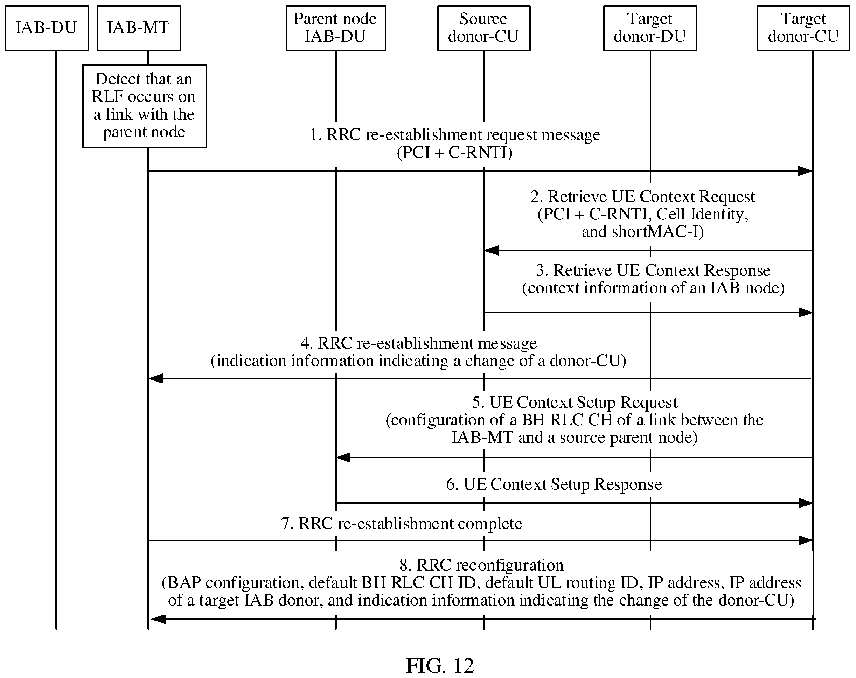

In embodiments of this application, an example of a schematic flowchart of an inter-donor-CU RRC re-establishment scenario may be that shown in FIG. 12. An RRC re-establishment procedure may include the following steps.

Step 1: When a recovery IAB node (namely, a first IAB node) detects that a case such as a migration failure, a radio link failure RLF, an integrity protection failure, or an RRC reconfiguration failure occurs on a link between the recovery IAB node and a source parent node, RRC reconnection is triggered. In other words, by performing step 1, a recovery IAB-MT (namely, an MT part of the first IAB node) sends an RRC re-establishment request message to a target IAB donor-CU through a selected new parent node (where the new parent node may also be referred to as a target parent node, and the target parent node may be an IAB node or may be a target IAB donor DU).

Optionally, the RRC re-establishment request message may carry a physical cell identifier PCI of an access cell of the recovery IAB-MT under the source parent node, and an identifier C-RNTI of the recovery IAB-MT under the access cell.

Step 2: The target IAB donor-CU sends a retrieve UE context request message (Retrieve UE Context Request) to a source IAB donor-CU.

Optionally, in addition to the PCI and the C-RNTI information that are carried by the recovery IAB-MT in the RRC re-establishment request message, the message may further carry a cell identity Cell Identity of a cell for which the IAB-MT performs re-establishment and an integrity check value shortMAC-I. The cell for which the IAB-MT performs the re-establishment refers to a cell selected during cell selection in an RRC re-establishment procedure triggered by the IAB-MT.

Step 3: The source IAB donor-CU sends a retrieve UE context response message (Retrieve UE Context Response) to the target IAB donor-CU.

Optionally, the message may carry a context of the recovery IAB node, including a context of the recovery IAB-MT and context information of a recovery IAB-DU.

The context of the recovery IAB-MT includes a configuration of a BH RLC CH used by the recovery IAB-MT to access the source parent node (or configuration information of a BH RLC CH established on the link between the recovery IAB-MT and the source parent node), including at least one of the following information:
an identifier of the BH RLC CH (BH RLC CH ID), a logical channel identifier corresponding to the BH RLC CH (BH LCH ID), an RLC configuration (RLC-config), or a logical channel configuration (LCH-config).

The context of the recovery IAB-DU includes at least one of the following information:
an identifier of the recovery IAB-DU (IAB-DU id and/or IAB-DU name), an identifier of a base station to which the recovery IAB-DU belongs (gNB ID), a local identifier of a cell of the recovery IAB-DU (cell local ID), a PLMN ID of the recovery IAB node, SSB information of the cell of the recovery IAB-DU, and the like.

Step 4: The target IAB donor-CU sends an RRC re-establishment message to the recovery IAB-MT.

Optionally, the message carries indication information indicating a change of a donor-CU, so that when the donor-CU changes, the recovery IAB-MT can trigger establishment/re-establishment of an F1 connection to the target IAB donor-CU.

Step 5: The target IAB donor-CU sends a UE context setup request message (UE Context Setup Request) to an IAB-DU of the target parent node.

Optionally, the message carries the configuration of the BH RLC CH used by the recovery IAB-MT to access the source parent node, so that the target parent node determines whether to allocate a new configuration to the BH RLC CH.

A sequence of step 4 and step 5 is not limited.

Step 6: The IAB-DU of the target parent node sends a UE context setup response message (UE Context Setup Response) to the target IAB donor-CU.

Step 7: The recovery IAB-MT to send an RRC re-establishment complete message to the target IAB donor-CU.

A sequence of steps 5, 6, and 7 is not limited.

Step 8: The target IAB donor-CU sends an RRC reconfiguration message to the recovery IAB-MT, where the message carries a BAP address allocated by the target IAB donor-CU to the recovery IAB node, a default BH RLC CH ID and a default route routing ID newly allocated by the target IAB donor-CU to the recovery IAB node on a target path, and an IP address allocated by a target IAB donor to the recovery IAB node. The target path refers to a path between the recovery IAB node and the target IAB donor through the target parent node.

Optionally, the message may further carry at least one type of the following information:
an IP address of the target IAB donor-CU, and the indication information indicating the change of the donor-CU.

In addition, to reduce signaling consumption between the target IAB donor-CU and the IAB-MT, the indication information indicating the change of the donor-CU may be sent only once. Optionally, if the RRC re-establishment message in step 4 carries the indication information indicating the change of the donor-CU, the RRC reconfiguration message in step 8 does not carry the indication information. Otherwise, if the indication information is not carried in step 4, the indication information is carried in step 8.

At this point, the recovery IAB-MT completes RRC re-establishment with the target IAB donor.

It should be noted that, the schematic flowchart shown in FIG. 12 may be an example implementation process of obtaining the configuration information of the BH RLC CH by the IAB donor in step S101 in the embodiment shown in FIG. 11. It can be learned from the foregoing descriptions that, in addition to the implementation process shown in FIG. 12, the IAB donor may further obtain the configuration information of the BH RLC CH in another manner. In addition, another step after step S101 in the embodiment shown in FIG. 11, namely, an implementation process of step S102 to step S108 in the embodiment shown in FIG. 11, may be further implemented based on the implementation process of the procedure shown in FIG. 12, or may be further implemented based on another implementation process instead of the implementation process of the procedure shown in FIG. 12. This is not specifically limited herein.

In a possible implementation, it can be learned from the schematic flowchart shown in FIG. 12 that, in step S101 of the embodiment shown in FIG. 11, that the IAB donor obtains the configuration information of the BH RLC CH may include: The IAB donor receives the retrieve user equipment UE context response message (namely, the Retrieve UE Context Response in step 3 shown in FIG. 12) from the source IAB donor, where the retrieve UE context response message includes the configuration information of the BH RLC CH. In other words, when the IAB donor is the donor node (namely, the target IAB donor) connected to the target parent node of the first IAB node, the IAB donor may obtain the configuration information of the BH RLC CH from the retrieve user equipment UE context response message sent by the donor node connected to the source parent node of the first IAB node.

In a possible implementation, in step S102 of the embodiment shown in FIG. 11, that the IAB donor sends the configuration information of the BH RLC CH to the target parent node of the first IAB node may be implemented in step 5 shown in FIG. 12, that is, a sending process and a receiving process of the configuration information of the BH RLC CH are implemented based on the UE context setup request message (UE Context Setup Request).

In a possible implementation, in step S104 of the embodiment shown in FIG. 11, the IAB donor sends the first indication information to the first IAB node through the target parent node of the first IAB node. The first indication information may be specifically the indication information indicating the change of the donor-CU shown in step 4 and step 8 in FIG. 12. Therefore, step S104 may be implemented in step 4 shown in FIG. 12, that is, a sending process and a receiving process of the first indication information are implemented based on the RRC re-establishment message. In addition, step S104 may alternatively be implemented in step 8 shown in FIG. 12, that is, a sending process and a receiving process of the first indication information are implemented based on the RRC reconfiguration message

In a possible implementation, in step S105 of the embodiment shown in FIG. 11, the IAB donor sends the IP address of the IAB donor to the first IAB node through the target parent node of the first IAB node. For example, step S105 may be implemented in step 8 shown in FIG. 12, that is, a sending process and a receiving process of the IP address of the IAB donor are implemented based on the RRC reconfiguration message. When the first indication information in step S104 is also implemented in step 8 shown in FIG. 12, that is, implemented based on the RRC reconfiguration message, the first indication information and the IP address of the IAB donor in step S105 may be carried in a same message, that is, both the first indication information and the IP address of the IAB donor in step S105 are carried in the RRC reconfiguration message.

In a possible implementation, if the application scenario of the IAB donor and the first IAB node is the inter-donor-CU RRC re-establishment scenario shown in FIG. 10-1, FIG. 10-2, FIG. 10-3, or FIG. 10-4, that is, when the IAB donor is the donor node (namely, the target IAB donor) connected to the target parent node of the first IAB node, the first IAB node may determine, in step S106 of the embodiment shown in FIG. 11, that the RRC re-establishment with the IAB donor is completed in an RRC re-establishment process with the target IAB donor. In other words, after receiving the RRC re-establishment complete message sent by the target IAB donor in step 7 shown in FIG. 12, the first IAB node may determine that the RRC re-establishment with the IAB donor is completed.

In addition, in the inter-donor-CU scenario, the IAB donor of the first IAB node changes, and consequently, configuration information of the recovery IAB-DU (the DU part of the first IAB node) needs to be updated. For example, a cell identity Cell identity or CGI of the cell of the recovery IAB-DU, a PLMN ID of the recovery IAB-DU, and the SSB information of the cell of the recovery IAB-DU. The recovery IAB-DU obtain a new configuration in two manners: obtaining from an OAM server and obtaining from the target IAB donor. In step S107 in the embodiment shown in FIG. 11, the IAB donor may send the first configuration information to the first IAB node in multiple manners. The following provides descriptions by using examples of several implementations.

Manner 1: Obtain the first configuration information from the CAM server.

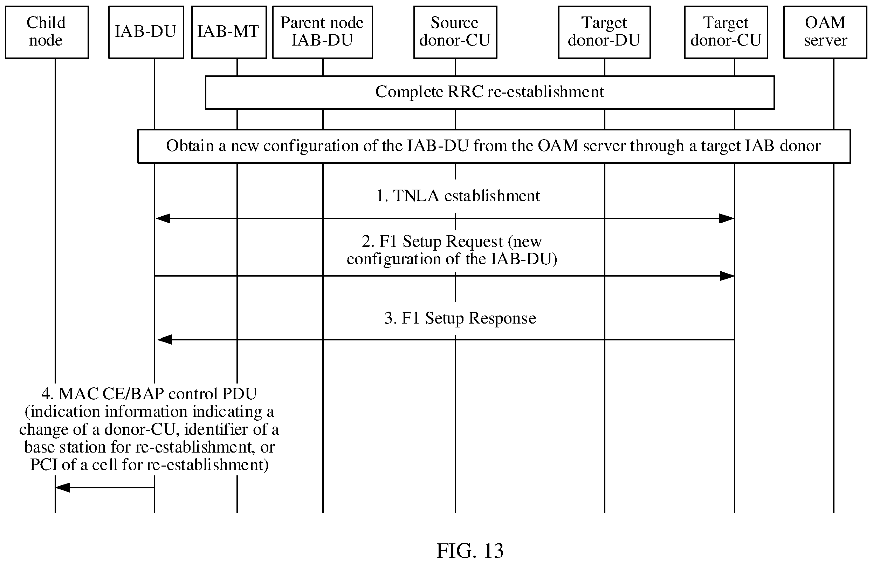

With reference to FIG. 13, after a recovery IAB-MT (an MT part of a first IAB node) completes RRC re-establishment with a target IAB donor, a recovery IAB-DU may obtain new configuration information from the CAM server through the target IAB donor. That is, after obtaining the new configuration information sent from the CAM server, the target IAB donor further sends the new configuration information to the recovery IAB-DU. That is to say, in this scenario, the target IAB donor only plays a role of forwarding transmission of the new configuration information between the recovery I AB -DU and the OAM server.

The new configuration of the recovery IAB-DU includes at least one of the following information: an identity CGI/Cell identity of a cell of the IAB-DU, a PLMN ID of the cell of the IAB-DU, and SSB information of the cell of the IAB-DU.

Optionally, in this scenario, a recovery IAB node may obtain an IP address of a target IAB donor-CU through the OAM server, and does not need to obtain the IP address based on the RRC reconfiguration message in step 8 in FIG. 12 (that is, the RRC reconfiguration message in step 8 in FIG. 12 does not need to carry the IP address of the target IAB donor-CU). Once the recovery IAB node obtains the new configuration, the recovery IAB node needs to trigger a procedure of establishment/re-establishment of an F1 interface for the target IAB donor. Specifically, a schematic diagram of the recovery IAB node triggering the procedure of the establishment/re-establishment of the F1 interface for the target IAB donor includes the following steps.
1. The recovery IAB-DU triggers establishment of a TNLA association with the target IAB donor-CU by using an IP address allocated to the recovery IAB-DU by the target IAB donor.
2. The recovery IAB-DU sends an F1 setup request message (F1 Setup Request) to the target IAB donor-CU to request to establish/re-establish an F1 connection between the recovery IAB-DU and the target IAB donor-CU.
3. The target IAB donor-CU sends an F1 setup response message (F1 Setup Response) to the recovery IAB-DU.
4. The recovery IAB-DU sends at least one type of the following information (namely, first information) to a child node, so that the child node triggers an RRC re-establishment procedure for the target IAB donor. The first information includes:
   indication information indicating a change of a donor-CU, RRC re-establishment indication information, an identifier of a base station for the re-establishment (for example, a gNB ID), and an identifier of a cell for the re-establishment (for example, a PCI).

The indication information indicating the change of the donor-CU (namely, first indication information) indicates a change of an IAB donor connected to the first IAB node. The indication information indicating the RRC re-establishment indicates the child node to trigger the RRC re-establishment, so that the child node learns that the RRC re-establishment procedure needs to be executed. The identifier of the cell for the re-establishment (for example, the PCI) indicates, to the child node, a cell identifier corresponding to a selected cell in the RRC re-establishment procedure, so that when performing cell selection, the child node selects the corresponding cell for the re-establishment. The identifier of the base station for the re-establishment (for example, the gNB ID) indicates, to the child node, a base station identifier corresponding to the selected cell in the RRC re-establishment procedure, so that when performing the cell selection, the child node selects a cell for the re-establishment under a specified base station (where a base station corresponding to the cell for the re-establishment is a base station identified by the gNB ID). The information may be carried in a MAC CE for sending, or may be carried in a backhaul adaptation protocol control packet data unit (backhaul adaptation protocol control packet data unit, BAP control PDU) for sending.

Optionally, in the process shown in FIG. 13, a sequence of step 4 and step 1, step 2, or step 3 is not limited.

Manner 2: Obtain the first configuration information from the target IAB donor.

A difference from manner 1 lies in that the target IAB donor generates new configuration information (namely, first configuration information) of a recovery IAB-DU and then notifies the recovery IAB-DU, and a procedure is different in step 2 and step 3.

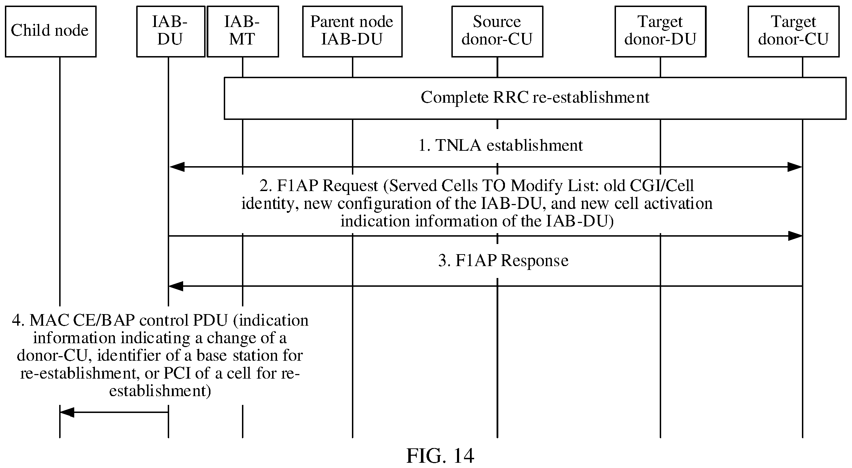

In a possible implementation, as shown in FIG. 14, the recovery IAB-DU obtains the new configuration information in step 2.

2. A target IAB donor-CU sends an FlAP request message to the recovery IAB-DU. The request message is used to establish/re-establish an F1 connection between the recovery IAB-DU and the target IAB donor-CU. The F1AP request message carries an information list of modifying a cell of the recovery IAB-DU, where each information list includes at least one type of the following information:
a source identity (for example, a source CGI or a source Cell identity) of the cell of the recovery IAB-DU, a new configuration of the recovery IAB-DU, and new cell activation indication information of the recovery IAB-DU.

The FlAP request message may be an existing FlAP message (for example, gNB-CU Configuration Update), or may be a newly defined F1AP message.

3. The recovery IAB-DU sends an FlAP response message to the target IAB donor-CU.

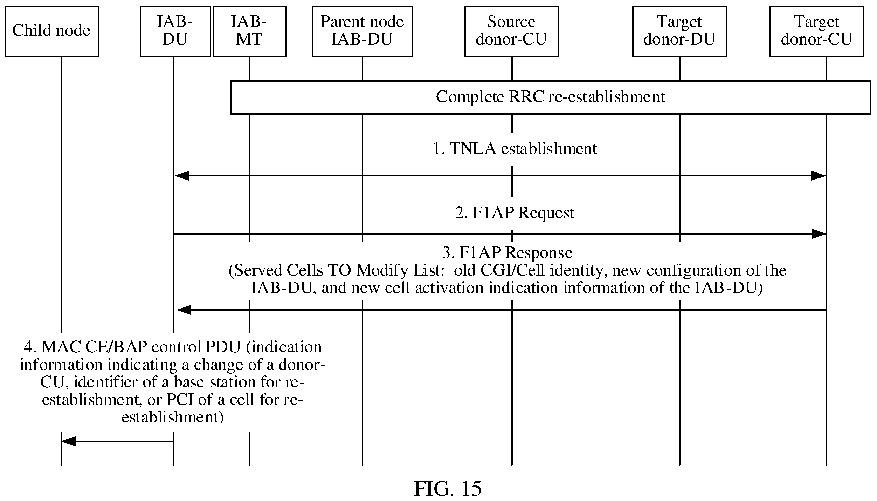

In another possible implementation, as shown in FIG. 15, a recovery IAB-DU obtains new configuration information in step 3.

2. The recovery IAB-DU sends an F1AP request message to a target IAB donor-CU. The request message is used to establish/re-establish an F1 connection between the recovery IAB-DU and the target IAB donor-CU.

3. The target IAB donor-CU sends an FlAP response message to the recovery IAB-DU. The FlAP response message carries an information list of modifying a cell of the recovery IAB-DU, where each information list includes at least one type of the following information:
a source identity (for example, a source CGI or a source Cell identity) of the cell of the recovery IAB-DU, a new configuration of the recovery IAB-DU, and new cell activation indication information of the recovery IAB-DU.

The FlAP request message may be an existing FlAP message (for example, gNB-DU Configuration Update Ack), or may be a newly defined FlAP message.

It should be noted that, the schematic flowcharts shown in FIG. 13 to FIG. 15 are several example implementation processes in which the IAB donor sends the first configuration information to the first IAB node in step S107 in the embodiment shown in FIG. 11. In addition to the implementation processes shown in FIG. 13 to FIG. 15, the IAB donor may further include the first configuration information in another message sent by the IAB donor to the first IAB node. This is not limited herein. In addition, step S107 in the embodiment shown in FIG. 11 in the schematic flowcharts shown in FIG. 13 to FIG. 15 needs to be performed after step S106 in the embodiment shown in FIG. 11, and does not depend on an implementation process of step S101 (the procedure shown in FIG. 12) to step S103 in the embodiment shown in FIG. 11. In addition, an execution sequence of step S107, step S104, and step S105 in the embodiment shown in FIG. 11 is not limited in embodiments of this application.

In addition, when the communication method is applied to the scenarios shown in FIG. 13 to FIG. 15, the first IAB node may perform, in step 4 in FIG. 13 to FIG. 15, step S108 in the embodiment shown in FIG. 11.

Specifically, when the communication method is applied to the scenarios shown in FIG. 13 to FIG. 15, the first IAB node may perform, after step 4 in FIG. 13 to FIG. 15, step S108 in the embodiment shown in FIG. 11. That is, once receiving the MAC CE/BAP control PDU in step 4, the child node triggers the RRC re-establishment procedure for the target IAB donor-CU. A corresponding procedure is the same as the RRC re-establishment procedure of the recovery IAB-MT (FIG. 12). Details are not described herein again.

The foregoing describes embodiments of this application from a perspective of a method. The following describes a communication apparatus in embodiments of this application from a perspective of specific apparatus implementation.

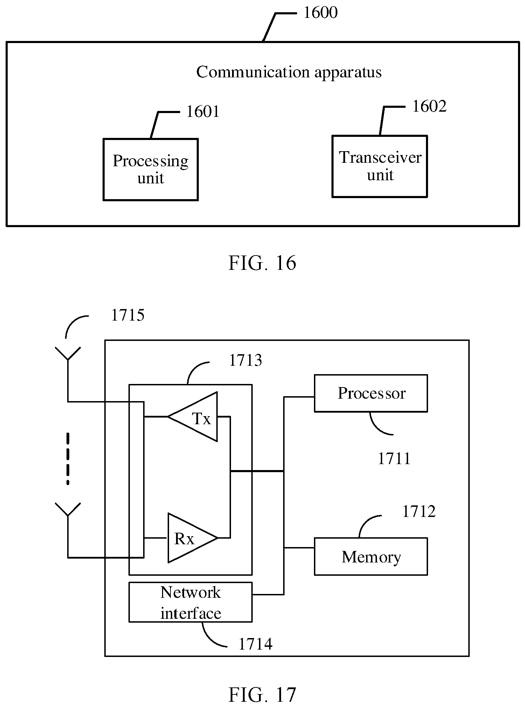

With reference to FIG. 16, an embodiment of this application provides a communication apparatus 1600. Specifically, the communication apparatus 1600 includes a processing unit 1601 and a transceiver unit 1602.

When the communication apparatus 1600 is configured to implement a function corresponding to the IAB donor, implementation of the processing unit 1601 and the transceiver unit 1602 in the communication apparatus 1600 includes the following processes.

The processing unit 1601 is configured to obtain configuration information of a backhaul radio link control channel BH RLC CH, where the configuration information of the BH RLC CH is configuration information of a BH RLC CH between a first integrated access and backhaul IAB node and a source parent node of the first IAB node.

The transceiver unit 1602 is configured to send the configuration information of the BH RLC CH to a target parent node of the first IAB node.

In a specific implementation, the configuration information of the BH RLC CH includes at least one of the following:
an identifier of the BH RLC CH, a logical channel identifier corresponding to the BH RLC CH, radio link control RLC configuration information, or logical channel configuration information.

In a specific implementation, the IAB donor is a target IAB donor, the target parent node is connected to the target IAB donor, and the source parent node is connected to a source IAB donor.

In a specific implementation,
the processing unit 1601 is specifically configured to receive a retrieve user equipment UE context response message from the source IAB donor, where the retrieve UE context response message includes the configuration information of the BH RLC CH.

In a specific implementation, the transceiver unit 1602 is further configured to:
send first indication information to the first IAB node through the target parent node, where the first indication information indicates a change of an IAB donor connected to the first IAB node.

In a specific implementation,
the first indication information is carried in an RRC re-establishment message; or
the first indication information is carried in an RRC reconfiguration message.

In a specific implementation, the transceiver unit 1602 is further configured to:
send internet protocol IP address information of the target IAB donor to the first IAB node through the target parent node.

In a specific implementation, the IP address information of the target IAB donor is carried in the RRC reconfiguration message.

In a specific implementation, the transceiver unit 1602 is further configured to:
send first configuration information to the first IAB node through the target parent node, where the first configuration information includes at least one of the following:
a source identifier of a cell of the first IAB node, a target identifier of the cell of the first IAB node, a PLMN ID of the cell of the first IAB node, SSB information of the cell of the first IAB node, or activation indication information of the cell of the first IAB node.

It should be noted that, for content such as an information execution process of the units in the communication apparatus 1600, refer to the descriptions corresponding to the IAB donor in the foregoing method embodiments of this application. Details are not described herein again.

When the communication apparatus 1600 is configured to implement a function corresponding to the target parent node of the first IAB node, implementation of the processing unit 1601 and the transceiver unit 1602 in the communication apparatus 1600 includes the following processes.

The transceiver unit 1602 is configured to receive configuration information of a backhaul radio link control channel BH RLC CH from an integrated access and backhaul donor IAB donor, where the configuration information of the BH RLC CH is configuration information of a BH RLC CH between the first integrated access and backhaul IAB node and a source parent node of the first IAB node.

The processing unit 1601 is configured to determine a configuration of a BH RLC CH between the first IAB node and the target parent node based on the configuration information of the BH RLC CH.

In a specific implementation, the configuration information of the BH RLC CH includes at least one of the following:
an identifier of the BH RLC CH, a logical channel identifier corresponding to the BH RLC CH, radio link control RLC configuration information, or logical channel configuration information.

It should be noted that, for content such as an information execution process of the units in the communication apparatus 1600, refer to the descriptions corresponding to the target parent node of the first IAB node in the foregoing method embodiments of this application. Details are not described herein again.

When the communication apparatus 1600 is configured to implement a function corresponding to the first IAB node, implementation of the processing unit 1601 and the transceiver unit 1602 in the communication apparatus 1600 includes the following processes.

The processing unit 1601 is configured to determine that RRC re-establishment with a target integrated access and backhaul donor IAB donor is completed.

The transceiver unit 1602 is configured to send first information to a child node of the first IAB node.

The first information includes at least one of the following:
indication information indicating a change of an IAB donor connected to the first IAB node, RRC re-establishment indication information, identification information of a base station for RRC re-establishment, or identification information of a cell for RRC re-establishment.

In a specific implementation,
the first information is carried in a media access control control element MAC CE; or
the first information is carried in a BAP control PDU.

In a specific implementation, the transceiver unit 1602 is further configured to:
receive first indication information from a target IAB donor, where the first indication information indicates the change of the IAB donor connected to the first IAB node.

In a specific implementation,
the first indication information is carried in an RRC re-establishment message; or
the first indication information is carried in an RRC reconfiguration message.

In a specific implementation, the processing unit 1601 is further configured to determine that establishment/re-establishment of an F1 connection to the IAB donor is completed or the F1 connection has been recovered.

In a specific implementation, the transceiver unit 1602 is further configured to:
receive IP address information of the target IAB donor from the target IAB donor.

In a specific implementation, the IP address information of the target IAB donor is carried in the RRC reconfiguration message.

In a specific implementation, the transceiver unit 1602 is specifically configured to:
receive first configuration information from the target IAB donor, where the first configuration information includes at least one of the following:
a source identifier of a cell of the first IAB node, a target identifier of the cell of the first IAB node, a PLMN ID of the cell of the first IAB node, SSB information of the cell of the first IAB node, or activation indication information of the cell of the first IAB node.

It should be noted that, for content such as an information execution process of the units in the communication apparatus 1600, refer to the descriptions corresponding to the first IAB node in the foregoing method embodiments of this application. Details are not described herein again.

When the communication apparatus 1600 is configured to implement a function corresponding to the child node of the first IAB node, implementation of the processing unit 1601 and the transceiver unit 1602 in the communication apparatus 1600 includes the following processes.

The transceiver unit 1602 is configured to receive first information from the first IAB node, where the first information includes at least one of the following:
indication information indicating a change of an IAB donor connected to the first IAB node, RRC re-establishment indication information, identification information of a base station for RRC re-establishment, or identification information of a cell for RRC re-establishment.

The processing unit 1601 is configured to trigger at least one of the following procedures based on the first information: the RRC re-establishment, F1 connection establishment, or F1 connection re-establishment.

In a specific implementation of the eighth aspect of embodiments of this application,
the first information is carried in a media access control control element MAC CE; or
the first information is carried in a BAP control PDU.

It should be noted that, for content such as an information execution process of the units in the communication apparatus 1600, refer to the descriptions corresponding to the child node of the first IAB node in the foregoing method embodiments of this application. Details are not described herein again.

FIG. 17 is a schematic diagram of a structure of a communication apparatus in the foregoing embodiments according to an embodiment of this application. The communication apparatus may be specifically the IAB donor, the target parent node of the first IAB node, the first IAB node, or the child node of the first IAB node in the foregoing embodiments. For the structure of the communication apparatus, refer to the structure shown in FIG. 17.

The communication apparatus includes at least one processor 1711, at least one memory 1712, at least one transceiver 1713, at least one network interface 1714, and one or more antennas 1715. The processor 1711, the memory 1712, the transceiver 1713, and the network interface 1714 are connected to each other, for example, through a bus. In this embodiment of this application, the connection may include various types of interfaces, transmission lines, buses, or the like. This is not limited in this embodiment. The antenna 1715 is connected to the transceiver 1713. The network interface 1714 is configured to enable the communication apparatus to connect to another communication device through a communication link. For example, the network interface 1714 may include a network interface between the communication apparatus and a core network device, for example, an S1 interface. The network interface may include a network interface between the communication apparatus and another network device (for example, another access network device or core network device), for example, an X2 or Xn interface.

The processor 1711 is mainly configured to: process a communication protocol and communication data; control the entire communication apparatus; execute a software program; and process data of the software program. For example, the processor 1711 is configured to support the communication apparatus in performing the actions in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1711 in FIG. 17. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

The memory is mainly configured to store the software program and data. The memory 1712 may exist independently, and is connected to the processor 1711. Optionally, the memory 1712 may be integrated with the processor 1711, for example, integrated into one chip. The memory 1712 can store program code for executing the technical solutions in embodiments of this application, and the processor 1711 controls the execution. Various types of executed computer program code may also be considered as drivers of the processor 1711.

FIG. 17 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or may be an independent storage element. This is not limited in this embodiment of this application.

The transceiver 1713 may be configured to support receiving or sending of a radio frequency signal between the communication apparatus and a terminal, and the transceiver 1713 may be connected to the antenna 1715. The transceiver 1713 includes a transmitter Tx and a receiver Rx. Specifically, the one or more antennas 1715 may receive a radio frequency signal. The receiver Rx in the transceiver 1713 is configured to: receive the radio frequency signal from the antenna, convert the radio frequency signal into a digital baseband signal or a digital intermediate frequency signal, and provide the digital baseband signal or the digital intermediate frequency signal for the processor 1711, so that the processor 1711 further processes the digital baseband signal or the digital intermediate frequency signal, for example, performs demodulation processing and decoding processing. In addition, the transmitter Tx in the transceiver 1713 is further configured to: receive a modulated digital baseband signal or digital intermediate frequency signal from the processor 1711, convert the modulated digital baseband signal or digital intermediate frequency signal into a radio frequency signal, and send the radio frequency signal through the one or more antennas 1715. Specifically, the receiver Rx may selectively perform one or more levels of frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one or more levels of frequency up-mixing processing and digital-to-analog conversion processing on the modulated digital baseband signal or the modulated digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The transceiver may also be referred to as a transceiver unit, a transceiver machine, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitter machine, a transmitting circuit, or the like.

It should be noted that the communication apparatus shown in FIG. 17 may be specifically configured to implement the steps implemented by the communication apparatus in the method embodiments corresponding to FIG. 11 to FIG. 15, and implement the technical effects corresponding to the communication apparatus. For specific implementations of the communication apparatus shown in FIG. 17, refer to the descriptions in the method embodiments corresponding to FIG. 11 to FIG. 15. Details are not described one by one herein again.

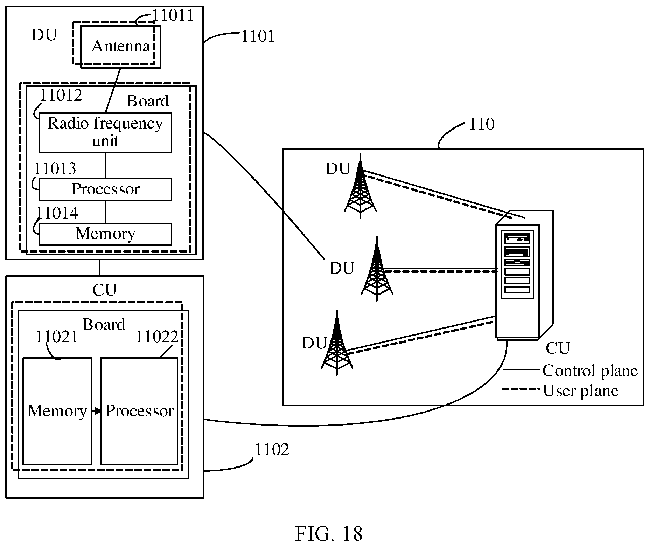

FIG. 18 is a schematic diagram of a structure of an IAB donor according to an embodiment of this application. The IAB donor may use a CU-DU split architecture. As shown in FIG. 18, the IAB donor may be applied to the system shown in FIG. 10-1, FIG. 10-2, FIG. 10-3, or FIG. 10-4, to implement a function of the IAB donor (the source IAB donor and/or the target IAB donor) in the foregoing method embodiments.

The IAB donor may include one or more DUs 1101 and one or more CUs 1102. The DU 1101 may include at least one antenna 11011, at least one radio frequency unit 11012, at least one processor 11013, and at least one memory 11014. The DU 1101 part is mainly configured to: receive and send a radio frequency signal, perform conversion between a radio frequency signal and a baseband signal, and perform some baseband processing. The CU 1102 may include at least one processor 11022 and at least one memory 11021. The CU 1102 and the DU 1101 may communicate with each other through an interface. A control plane (control plane) interface may be F1-C, and a user plane (user Plane) interface may be F1-U.

The CU 1102 part is mainly configured to: perform baseband processing, control a base station, and the like. The DU 1101 and the CU 1102 may be physically disposed together, or may be physically disposed separately, namely, a distributed base station. The CU 1102 is a control center of the base station, may also be referred to as a processing unit, and is mainly configured to complete a baseband processing function. For example, the CU 1102 may be configured to control the base station to perform an operation procedure related to the network device in the foregoing method embodiments.

Specifically, baseband processing on the CU and the DU may be divided based on a protocol layer of a wireless network. For details, refer to the foregoing content.

In an instance, the CU 1102 may include one or more boards, and a plurality of boards may jointly support a radio access network (for example, a 5G network) of a single access standard, or may separately support radio access networks (for example, an LTE network, a 5G network, or another access network) of different access standards. The memory 11021 and the processor 11022 may serve one or more boards. In other words, a memory and a processor may be disposed on each board. Alternatively, a plurality of boards may share a same memory and a same processor. In addition, a necessary circuit may further be disposed on each board. The DU 1101 may include one or more boards, and a plurality of boards may jointly support a radio access network (for example, a 5G network) of a single access standard, or may separately support radio access networks (for example, an LTE network, a 5G network, or another access network) of different access standards. The memory 11014 and the processor 11013 may serve one or more boards. In other words, a memory and a processor may be disposed on each board. Alternatively, a plurality of boards may share a same memory and a same processor. In addition, a necessary circuit may further be disposed on each board.

Optionally, the CU 1102 may perform transmission with a child node of the IAB donor through the DU 1101. The CU 1102 may be connected to another IAB donor through an interface. The CU 1102 may receive data and/or a message from the another IAB donor (for example, a CU of the another IAB donor) through the interface, or the CU 1102 may send data and/or a message to the another IAB donor through the interface.

An embodiment of this application further provides a computer-readable storage medium storing one or more computer-executable instructions. When the computer-executable instructions are executed by a processor, the processor performs the method implemented by the foregoing communication apparatus, for example, the method implemented by the IAB donor, the target parent node of the first IAB node, the first IAB node, or the child node of the first IAB node.

An embodiment of this application further provides a computer program product (or referred to as a computer program) that stores one or more computers. When the computer program product is executed by a processor, the processor performs the method implemented by the foregoing communication apparatus, for example, the method implemented by the IAB donor, the target parent node of the first IAB node, the first IAB node, or the child node of the first IAB node.

An embodiment of this application further provides a chip system. The chip system includes a processor, configured to support a communication apparatus in implementing the method implemented by the communication apparatus, for example, the method implemented by the IAB donor, the target parent node of the first IAB node, the first IAB node, or the child node of the first IAB node. In a possible design, the chip system may further include a memory. The memory is configured to store program instructions and data that are necessary for the communication apparatus. The chip system may include a chip, or may include a chip and another discrete component.

An embodiment of this application further provides a communication system. The communication system includes the foregoing communication apparatus, for example, the IAB donor, the target parent node of the first IAB node, the first IAB node, and/or the child node of the first IAB node.

In the several embodiments provided in this application, it should be understood that the disclosed system, apparatus, and method may be implemented in another manner. For example, the described apparatus embodiment is merely an example. For example, division into the units is merely logical function division. There may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, may be located in one place, or may be distributed on a plurality of network units. Apart or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A communication method applied to an integrated access and backhaul IAB system, comprising:
obtaining, by an integrated access and backhaul donor IAB donor, configuration information of a backhaul radio link control channel BH RLC CH, wherein the configuration information of the BH RLC CH is configuration information of a BH RLC CH between a first integrated access and backhaul IAB node and a source parent node of the first IAB node; and
sending, by the IAB donor, the configuration information of the BH RLC CH to a target parent node of the first IAB node.

2. The method according to claim 1, wherein the configuration information of the BH RLC CH comprises at least one of the following:
an identifier of the BH RLC CH, a logical channel identifier corresponding to the BH RLC CH, radio link control RLC configuration information, or logical channel configuration information.

3. The method according to claim 1 or 2, wherein the IAB donor is a target IAB donor, the target parent node is connected to the target IAB donor, and the source parent node is connected to a source IAB donor.

4. The method according to claim 3, wherein
the obtaining, by an IAB donor, configuration information of a BH RLC CH comprises:
receiving, by the IAB donor, a retrieve user equipment UE context response message from the source IAB donor, wherein the retrieve UE context response message comprises the configuration information of the BH RLC CH.

5. The method according to claim 3 or 4, wherein the method further comprises:
sending, by the IAB donor, first indication information to the first IAB node through the target parent node, wherein the first indication information indicates a change of an IAB donor connected to the first IAB node.

6. The method according to claim 5, wherein
the first indication information is carried in an RRC re-establishment message; or
the first indication information is carried in an RRC reconfiguration message.

7. The method according to any one of claims 3 to 6, wherein the method further comprises:
sending, by the IAB donor, internet protocol IP address information of the IAB donor to the first IAB node through the target parent node.

8. The method according to claim 7, wherein the IP address information of the target IAB donor is carried in the RRC reconfiguration message.

9. The method according to any one of claims 3 to 8, wherein the method further comprises:
sending, by the IAB donor, first configuration information to the first IAB node through the target parent node, wherein the first configuration information comprises at least one of the following:
a source identifier of a cell of the first IAB node, a target identifier of the cell of the first IAB node, a PLMN ID of the cell of the first IAB node, SSB information of the cell of the first IAB node, or activation indication information of the cell of the first IAB node.

10. A communication method applied to an integrated access and backhaul IAB system, comprising:
receiving, by a target parent node of a first integrated access and backhaul IAB node, configuration information of a backhaul radio link control channel BH RLC CH from an IAB donor IAB donor, wherein the configuration information of the BH RLC CH is configuration information of a BH RLC CH between the first IAB node and a source parent node of the first IAB node; and
determining, by the target parent node, a configuration of a BH RLC CH between the first IAB node and the target parent node based on the configuration information of the BH RLC CH.

11. The method according to claim 10, wherein the configuration information of the BH RLC CH comprises at least one of the following:
an identifier of the BH RLC CH, a logical channel identifier corresponding to the BH RLC CH, radio link control RLC configuration information, or logical channel configuration information.

12. A communication method applied to an integrated access and backhaul IAB system, comprising:
determining, by a first integrated access and backhaul IAB node, that RRC re-establishment with an IAB donor IAB donor is completed; and
sending, by the first IAB node, first information to a child node of the first IAB node, wherein
the first information comprises at least one of the following:
indication information indicating a change of an IAB donor connected to the first IAB node, RRC re-establishment indication information, identification information of a base station for RRC re-establishment, or identification information of a cell for RRC re-establishment.

13. The method according to claim 12, wherein
the first information is carried in a media access control control element MAC CE; or
the first information is carried in a backhaul adaptation protocol control packet data unit BAP control PDU.

14. The method according to claim 12 or 13, wherein before the sending, by the first IAB node, first information to a child node, the method further comprises:
receiving, by the first IAB node, first indication information from a target IAB donor, wherein the first indication information indicates the change of the IAB donor connected to the first IAB node.

15. The method according to claim 14, wherein
the first indication information is carried in an RRC re-establishment message; or
the first indication information is carried in an RRC reconfiguration message.

16. The method according to any one of claims 12 to 15, wherein before the sending, by the first IAB node, first information to a child node of the first IAB node, the method further comprises:
determining, by the first IAB node, that establishment/re-establishment of an F1 connection to the IAB donor is completed or the F1 connection has been recovered.

17. The method according to any one of claims 12 to 16, wherein the method further comprises:
receiving, by the first IAB node, IP address information of the IAB donor from the IAB donor.

18. The method according to claim 17, wherein the IP address information of the IAB donor is carried in the RRC reconfiguration message.

19. The method according to any one of claims 12 to 18, wherein after the determining, by a first IAB node, that RRC re-establishment with an IAB donor IAB donor is completed, the method further comprises:
receiving, by the first IAB node, first configuration information from the IAB donor, wherein the first configuration information comprises at least one of the following:
a source identifier of a cell of the first IAB node, a target identifier of the cell of the first IAB node, a PLMN ID of the cell of the first IAB node, SSB information of the cell of the first IAB node, or activation indication information of the cell of the first IAB node.

20. A communication method applied to an integrated access and backhaul IAB system, comprising:
receiving, by a child node of a first integrated access and backhaul IAB node, first information from the first IAB node, wherein the first information comprises at least one of the following:
indication information indicating a change of an IAB donor connected to the first IAB node, RRC re-establishment indication information, identification information of a base station for RRC re-establishment, or identification information of a cell for RRC re-establishment; and
triggering, by the child node based on the first information, at least one of the following procedures: RRC re-establishment, F1 connection establishment, or F 1 connection re-establishment.

21. The method according to claim 20, wherein
the first information is carried in a media access control control element MAC CE; or
the first information is carried in a backhaul adaptation protocol control packet data unit BAP control PDU.

22. A communication apparatus, wherein the apparatus is an integrated access and backhaul donor IAB donor, and the apparatus comprises:
a processing unit, configured to obtain configuration information of a backhaul radio link control channel BH RLC CH, wherein the configuration information of the BH RLC CH is configuration information of a BH RLC CH between a first integrated access and backhaul IAB node and a source parent node of the first IAB node; and
a transceiver unit, configured to send the configuration information of the BH RLC CH to a target parent node of the first IAB node.

23. The apparatus according to claim 22, wherein the configuration information of the BH RLC CH comprises at least one of the following:
an identifier of the BH RLC CH, a logical channel identifier corresponding to the BH RLC CH, radio link control RLC configuration information, or logical channel configuration information.

24. The apparatus according to claim 22 or 23, wherein the IAB donor is a target IAB donor, the target parent node is connected to the target IAB donor, and the source parent node is connected to a source IAB donor.

25. The apparatus according to claim 24, wherein
the processing unit is specifically configured to receive a retrieve user equipment UE context response message from the source IAB donor, wherein the retrieve UE context response message comprises the configuration information of the BH RLC CH.

26. The apparatus according to claim 24 or 25, wherein the transceiver unit is further configured to:
send first indication information to the first IAB node through the target parent node, wherein the first indication information indicates a change of an IAB donor connected to the first IAB node.

27. The apparatus according to claim 26, wherein
the first indication information is carried in an RRC re-establishment message; or
the first indication information is carried in an RRC reconfiguration message.

28. The apparatus according to any one of claims 24 to 27, wherein the transceiver unit is further configured to:
send IP address information of the target IAB donor to the first IAB node through the target parent node.

29. The apparatus according to claim 28, wherein the IP address information of the target IAB donor is carried in the RRC reconfiguration message.

30. The apparatus according to any one of claims 24 to 29, wherein the transceiver unit is further configured to:
send first configuration information to the first IAB node through the target parent node, wherein the first configuration information comprises at least one of the following:
a source identifier of a cell of the first IAB node, a target identifier of the cell of the first IAB node, a PLMN ID of the cell of the first IAB node, SSB information of the cell of the first IAB node, or activation indication information of the cell of the first IAB node.

31. A communication apparatus, wherein the apparatus is a target parent node of a first IAB node, and the apparatus comprises:
a transceiver unit, configured to receive configuration information of a backhaul radio link control channel BH RLC CH from an integrated access and backhaul donor IAB donor, wherein the configuration information of the BH RLC CH is configuration information of a BH RLC CH between the first integrated access and backhaul IAB node and a source parent node of the first IAB node; and
a processing unit, configured to determine a configuration of a BH RLC CH between the first IAB node and the target parent node based on the configuration information of the BH RLC CH.

32. The apparatus according to claim 31, wherein the configuration information of the BH RLC CH comprises at least one of the following:
an identifier of the BH RLC CH, a logical channel identifier corresponding to the BH RLC CH, radio link control RLC configuration information, or logical channel configuration information.

33. A communication apparatus, wherein the apparatus is a first integrated access and backhaul IAB node, and the apparatus comprises:
a processing unit, configured to determine that RRC re-establishment with a target integrated access and backhaul donor IAB donor is completed; and
a transceiver unit, configured to send first information to a child node of the first IAB node, wherein
the first information comprises at least one of the following:
indication information indicating a change of an IAB donor connected to the first IAB node, RRC re-establishment indication information, identification information of a base station for RRC re-establishment, or identification information of a cell for RRC re-establishment.

34. The apparatus according to claim 33, wherein
the first information is carried in a media access control control element MAC CE; or
the first information is carried in a backhaul adaptation protocol control packet data unit BAP control PDU.

35. The apparatus according to claim 33 or 34, wherein the transceiver unit is further configured to:
receive first indication information from a target IAB donor, wherein the first indication information indicates the change of the IAB donor connected to the first IAB node.

36. The apparatus according to claim 35, wherein
the first indication information is carried in an RRC re-establishment message; or
the first indication information is carried in an RRC reconfiguration message.

37. The apparatus according to any one of claims 33 to 36, wherein the processing unit is further configured to:
determine that establishment/re-establishment of an F1 connection to the IAB donor is completed or the F1 connection has been recovered.

38. The apparatus according to any one of claims 33 to 37, wherein the transceiver unit is further configured to:
receive internet protocol IP address information of the target IAB donor from the target IAB donor.

39. The apparatus according to claim 38, wherein the IP address information of the target IAB donor is carried in the RRC reconfiguration message.

40. The apparatus according to any one of claims 33 to 39, wherein the transceiver unit is specifically configured to:
receive first configuration information from the target IAB donor, wherein the first configuration information comprises at least one of the following:
a source identifier of a cell of the first IAB node, a target identifier of the cell of the first IAB node, a PLMN ID of the cell of the first IAB node, SSB information of the cell of the first IAB node, or activation indication information of the cell of the first IAB node.

41. A communication apparatus, wherein the apparatus is a child node of a first integrated access and backhaul IAB node, and the apparatus comprises:
a transceiver unit, configured to receive first information from the first IAB node, wherein the first information comprises at least one of the following:
indication information indicating a change of an IAB donor connected to the first IAB node, RRC re-establishment indication information, identification information of a base station for RRC re-establishment, or identification information of a cell for RRC re-establishment; and
a processing unit, configured to trigger at least one of the following procedures based on the first information: the RRC re-establishment, F1 connection establishment, or F1 connection re-establishment.

42. The apparatus according to claim 41, wherein
the first information is carried in a media access control control element MAC CE; or
the first information is carried in a backhaul adaptation protocol control packet data unit BAP control PDU.

43. A communication apparatus, comprising: a processor, wherein the processor is coupled to a memory, the memory is configured to store a computer program or instructions, and the processor is configured to execute the computer program or the instructions in the memory, to enable the communication apparatus to perform the communication method applied to the integrated access and backhaul IAB system according to any one of claims 1 to 9, the communication method applied to the integrated access and backhaul IAB system according to claim 10 or 11, the communication method applied to the integrated access and backhaul IAB system according to any one of claims 12 to 19, or the communication method applied to the integrated access and backhaul IAB system according to claim 20 or 21.

44. A chip, wherein the chip comprises a processor and a communication interface, wherein
the communication interface is coupled to the processor, and the processor is configured to run a computer program or instructions to implement the communication method applied to the integrated access and backhaul IAB system according to any one of claims 1 to 9, the communication method applied to the integrated access and backhaul IAB system according to claim 10 or 11, the communication method applied to the integrated access and backhaul IAB system according to any one of claims 12 to 19, or the communication method applied to the integrated access and backhaul IAB system according to claim 20 or 21.

45. A computer-readable storage medium, wherein the storage medium is configured to store a computer program or instructions, and when the computer program or the instructions are executed, a computer is enabled to perform the communication method applied to the integrated access and backhaul IAB system according to any one of claims 1 to 9, the communication method applied to the integrated access and backhaul IAB system according to claim 10 or 11, the communication method applied to the integrated access and backhaul IAB system according to any one of claims 12 to 19, or the communication method applied to the integrated access and backhaul IAB system according to claim 20 or 21.

46. A computer program product, wherein the computer program product comprises a computer program or instructions, and when the computer program product runs on a computer, the computer is enabled to perform the method according to any one of claims 1 to 9, the method according to claim 10 or 11, the method according to any one of claims 12 to 19, or the method according to claim 20 or 21.

47. A communication system, wherein
the communication system comprises the communication apparatus according to any one of claims 22 to 30, the communication apparatus according to claim 31 or 32, the communication apparatus according to any one of claims 33 to 40, and/or the communication apparatus according to claim 41 or 42; or
the communication system comprises the communication apparatus according to claim 43.
